# EUROPEAN PATENT SPECIFICATION

(11) **EP 4 658 479 B1**
(45) Date of publication and mention of the grant of the patent: **20.05.2026**
(21) Application number: 24701802.1
(22) Date of filing: 17.01.2024
(51) Int. Cl.: B29C 64/118, B29C 64/194, B33Y 10/00, B33Y 80/00

(54) **INTEGRATING LEAKY OPTICAL FIBERS IN 3D PRINTED ITEMS**
INTEGRATION VON LECKENDEN OPTISCHEN FASERN IN 3D-GEDRUCKTEN ELEMENTEN
INTÉGRATION DE FIBRES OPTIQUES À FUITE DANS DES ARTICLES IMPRIMÉS EN 3D

(30) Priority: 30.01.2023 EP 23153992
(43) Date of publication of application: 10.12.2025
(73) Proprietor: Signify Holding B.V., 5656 AE Eindhoven (NL)
(72) Inventor: HIKMET, Rifat Ata Mustafa, 5656 AE Eindhoven (NL); VDOVIN, Olexandr Valentynovych, 5656 AE Eindhoven (NL); VAN BOMMEL, Ties, 5656 AE Eindhoven (NL)
(74) Representative: Verweij, Petronella Daniëlle
(86) International application number: PCT/EP2024/051026
(87) International publication number: WO 2024/160545

(56) References cited:
- EP-A1- 3 363 619
- EP-A1- 3 511 155
- EP-B1- 3 609 680

## Description

### FIELD OF THE INVENTION

The invention relates to a method for manufacturing a 3D (printed) item. Further, the invention may relate to a fused deposition modelling 3D printer comprising a control system configured for executing such method. The invention also relates to the 3D (printed) item obtainable with such method. Further, the invention relates to a lighting device including such 3D (printed) item.

### BACKGROUND OF THE INVENTION

Methods of 3D printing parts incorporating fiber are known in the art.

US2017157851A1 describes a process and device for 3D printing parts incorporating long-fiber reinforcements in an advanced composite material. A nozzle for a 3D printing device receives a polymer material and a reinforcing fiber through separate inlets. A passage from the reinforcing fiber inlet cleaves the passage containing the polymer material, creating an interstitial cavity into which the reinforcing fiber is introduced. The polymer material closes back on itself and encapsulates the reinforcing fiber, then drags the fiber along with the flow and exits nozzle to be deposited on a work surface or part being manufactured.

EP3363619A1 discloses a method comprising 3D printing a 3D item. The method comprises depositing during a printing stage 3D printable material and an optical fiber, to provide the 3D item with the optical fiber at least partly embedded in 3D printed material. The 3D printable material during at least part of the printing stage comprises a light transmissive material. The method further comprises providing during the printing stage a light escape part comprising 3D printed material comprising the light transmissive material, where visible light propagating through the optical fiber can escape from the optical fiber via the 3D printed material comprised by the light escape part to external of the 3D item.

EP3511155A1 discloses an apparatus for additive manufacturing, wherein the apparatus is designed for producing a workpiece by fusing a material filament and forming a layer of the fused material of the material filament. An optical fibre and feeding means for the optical fibre are provided, wherein the optical fibre is separate from the material filament and from the fused material filament. The apparatus is designed for depositing and embedding the optical fibre into the layer of the fused material of the material filament.

### SUMMARY OF THE INVENTION

Within the next 10-20 years, digital fabrication will increasingly transform the nature of global manufacturing. One of the aspects of digital fabrication is 3D printing. Currently, many different techniques have been developed in order to produce various 3D printed items using various materials such as ceramics, metals, and polymers. 3D printing can also be used in producing molds which can then be used for replicating objects.

For the purpose of making molds, the use of polyjet technique has been suggested. This technique makes use of layer by layer deposition of photo-polymerizable material which is cured after each deposition to form a solid structure. While this technique produces smooth surfaces the photo curable materials are not very stable, and they also have relatively low thermal conductivity to be useful for injection molding applications.

The most widely used additive manufacturing technology is the process known as Fused Deposition Modeling (FDM, trademark acronym). Fused deposition modeling (FDM) is an additive manufacturing technology commonly used for modeling, prototyping, and production applications. FDM works on an "additive" principle by laying down material in layers; a plastic filament or metal wire is unwound from a coil and supplies material to produce a part. Possibly, (for thermoplastics for example) the filament is melted and extruded before being laid down. FDM is a rapid prototyping technology. Other terms for FDM are "fused filament fabrication" (FFF) or "filament 3D printing" (FDP), which are considered to be equivalent to FDM. In general, FDM printers use a thermoplastic filament, which is heated to its melting point and then extruded, layer by layer, (or in fact filament after filament) to create a three-dimensional object. FDM printers are relatively fast, low cost and can be used for printing complicated 3D objects. Such printers are used in printing various shapes using various polymers. The technique is also being further developed in the production of LED luminaires and lighting solutions.

There is desire to further control structure and appearance of 3D printed items, e.g. for optical properties, for tactile properties, for mechanical properties, for aesthetic properties, etc. Especially, methods wherein an optical fiber may be incorporated in the 3D item to create improved illuminated surfaces may be desired. However, current methods do not provide such options or only in a limited and often unreliable way.

Hence, it is an aspect of the invention to provide an alternative 3D printing method and/or 3D (printed) item which preferably further at least partly obviate(s) one or more of above-described drawbacks. The present invention may have as object to overcome or ameliorate at least one of the disadvantages of the prior art, or to provide a useful alternative.

Hence, in a first aspect the invention provides a method for producing a 3D item by means of fused deposition modelling. The 3D item at least partly comprises an optical fiber. The optical fiber is a leaky optical fiber partly integrated in the 3D item. The method comprises a 3D printing stage. The 3D printing stage comprises layer-wise depositing of an extrudate comprising 3D printable material. Such layer-wise depositing provides a plurality of layers of 3D printed material. The plurality of layers comprises n sets of two stacked layers, e.g., two adjacent stacked layers. Each set comprises a first layer and a second layer. The plurality of layers of printed material comprises at least one set of two stacked layers, i.e., n≥1. The method comprises k1 integration stages, wherein k1≥2. Each integration stage comprises (a) after providing the first layer of one of the n sets, providing the optical fiber on the first layer, such that the optical fiber extends from the first layer and at least partly protrudes into the first layer thereby forming at least part of a through hole, and (b) subsequently providing the second layer on the first layer and part of the optical fiber, such that part of the optical fiber resides in the through hole formed in the set of layers. The method comprises executing the 3D printing stage and the k1 integration stages such that the optical fiber forms p external loops, i.e., loops extending external of the plurality of layers of 3D printed material, wherein 1≤p≤k1-1.

Hence, the invention provides a method for producing a 3D item by means of fused deposition modelling, wherein the 3D item also at least partly comprises a leaky optical fiber; the method comprising: (A) a 3D printing stage, comprising layer-wise depositing 3D printable material, to provide a plurality of layers of 3D printed material, wherein the plurality of layers comprises n sets of two stacked layers, wherein each set comprises a first layer and a second layer; wherein n≥1; (B) k1 integration stages, wherein each integration stage comprises: (a) after providing the first layer of one of the n sets, providing the optical fiber on the first layer, such that the optical fiber may extend from the first layer and may at least partly protrude into the first layer thereby forming at least part of a through hole, and (b) subsequently providing the second layer on the first layer and part of the optical fiber, such that part of the optical fiber may reside in the through hole formed in the set of layers; (C) executing the 3D printing stage and the k1 integration stages such that the optical fiber forms p external loops, wherein k≥2, and wherein 1≤p≤k1-1.

With such a method, it is possible to provide 3D items with integrated leaky optical fibers in a reliable way, without showing defects in the 3D print. Further, the method may provide 3D items with improved illuminated surfaces. With the present invention it may also be possible to control the spatial distribution of the optical fiber while printing relatively easily. Especially, the optical fiber may be kept at a desired position while being securely integrated in the 3D item in a reliable way. Light may escape from the optical fiber, in which a light generating device is created by - amongst others - 3D printing. Further, the present invention may provide improved material efficiency as a relatively small part of the optical fiber may be enclosed by the 3D printed layers. Hence, the majority of the optical fiber may be uncovered and can thus provide light with relatively high efficiency.

As indicated above, the invention provides a method for producing a 3D (printed) item by means of fused deposition modelling. Herein, the 3D item at least partly comprises a leaky optical fiber. The term "leaky optical fiber", or similar terms, may refer to an optical fiber which, when during an operational mode light is provided (in)to the optical fiber, may suffer propagation losses due to fractions of light escaping from the optical fiber, at least over part of its length. For instance, the light may escape into the cladding of the fiber (i.e., leaking into the cladding of the fiber), for example through distortion of the total internal reflection of the fiber by reflective particles (see also further below), and/or the cladding may be interrupted to allow escape of the light. As a result light slowly attenuates in the direction of propagation, and the fiber may provide a glowing appearance.

The optical fiber is partly integrated in the 3D item through the method described herein. The method comprises a 3D printing stage. Basically, the 3D printing stage comprises feeding 3D printable material, forming an extrudate, and depositing the 3D printable material, to provide a 3D item comprising 3D printed material. The 3D printing stage comprises layer-wise depositing 3D printable material to provide a plurality of layers of 3D printed material.

In embodiments, the 3D printable material may be provided to a 3D printer, especially to the printer head of a 3D printer. Subsequently, the 3D printable material may be extruded by the printer head through a nozzle and onto a receiver item. For example, in embodiments, the 3D printable material may be deposited on a printing platform. Especially, in embodiments, the 3D printable material may be deposited in a direction such that a string of 3D printable material is provided. By deposition, the 3D printable material becomes 3D printed material.

Further, a printing direction in which the 3D printable material is provided may especially be along a longitudinal axis (A_{X}). Herein, the longitudinal axis (A_{X}) may refer to an axis coinciding with a direction of the length of the respective 3D printed layer (and thus with a printing path of the respective 3D printed layer). In embodiments, the respective 3D printed layer may not be straight in length, for example the layer may comprise a curve or a corner, therefore, the 3D printed layer may comprise a local direction of its length in a specific location. Hence, in such embodiments, the longitudinal axis (A_{X}) may comprise bends (like a mean center circle of a ring).

Thus, in embodiments, 3D printable material may be deposited in a layer-wise fashion, such that a plurality of layers of 3D printed material is provided. Hence, by depositing a plurality of layers of 3D printable material in a stacked manner, a 3D item may be provided.

The plurality of layers (of the 3D printed item) comprises n sets of two (adjacent) stacked layers. Each set comprises a first layer and a second layer. A second layer (of a first set) can be a first layer of another set (i.e., a first layer of a second set). For example, in embodiments, the plurality of layers may comprise three layers (e.g. layer a, layer b, and layer c) and 2 sets (i.e., n=2). In such embodiments, layer a may be the first layer of the first set, layer b may be the second layer of the first set and the first layer of the second set, and layer c may be the second layer of the second set. However, in other embodiments, the second layer of the first set may be different from the first layer of the second set. Note that in principle a single set may suffice, however, in practice the plurality of layers may comprise a plurality of sets.

The plurality of layers comprises at least one set, such as at least two sets, like at least five sets, especially at least ten sets. Hence, n≥1. Yet, in embodiments, the plurality of layers may comprise at most 5 sets, such as at least 10 sets, like selected from the range of 5-200 sets. However, other values may also be possible.

In addition to, during a printing stage, 3D printing a plurality of layers of 3D printable material to provide a 3D item, also the leaky optical fiber is partly integrated in the 3D item.

Therefore, the method also comprises an integration stage. Especially, the method comprises k1 integration stages, wherein k1 is equal to two or more than two, such as at least four, like at least ten. Hence, k1≥2. Further, in embodiments, k1 may in embodiments be at least 10, like selected from the range of 2-1000, such as 5-500, especially from the range of 4-100, or from the range of 3-50. However, other values may also be possible.

Each integration stage comprises (a) after providing the first layer of one of the n sets, providing the optical fiber on the first layer, and (b) subsequently providing the second layer on the first layer and (on) part of the optical fiber. The optical fiber extends from the first layer and partly protrudes into the first layer. Hence, the optical fiber forms at least part of a through hole (through the first layer). Further, in embodiments, the optical fiber may (also) extend from the first and the second layer and partly protrude into the first layer and the second layer. Hence, the optical fiber forms at least part of a through hole (through the first layer and the second layer). Especially, part of the optical fiber resides in the through hole formed in the set of layers. Herein, the phrase "the optical fiber may extend from x", or similar terms, may refer to the optical fiber protruding from x. For example, the optical fiber may extend from the first layer and partly protrude into the first layer, i.e., the part of the optical fiber protruding into the first layer is in contact with the first layer, whereas the part of the optical fiber protruding from the first layer is not in contact with the first layer.

As mentioned above, the optical fiber may be provided on the first layer (of a set of stacked layers). Especially, in embodiments, the optical fiber may be provided not (anti-)parallel to a longitudinal axis (A_{X}) of the first (and second) layer. For example, in embodiments, the optical fiber may be provided perpendicular to the (local) longitudinal axis (A_{X}) of the first (and second) layer. Hence, in embodiments, the optical fiber may be provided under a fiber angle (α_{F}). The fiber angle (α_{F}) may be defined relative to the longitudinal axis (A_{X}). Especially, in embodiments, 10°≤α_{F}≤90°, such as 45°≤α_{F}≤85°, like 10°≤α_{F}≤45°. More especially, in embodiments, α_{F}≠0°. Hence, in embodiments, the optical fiber may be arranged non-parallel with respect to the first (and second) layer.

As described above, the optical fiber may, in embodiments, be provided perpendicular to the local longitudinal axis (A_{X}) of the first layer. Herein perpendicular may not necessarily mean the optical fiber may never be parallel to the first layer. Part of one or more external loops of the optical fiber may in embodiments be parallel to the first layer, so long as the optical fiber is not fully parallel to the first layer. In embodiments, only a relatively small part of one or more external loops of the optical fiber may be parallel to the first layer, such as <10% of the loop, like <5%. However, in other embodiments, a relatively large part of one or more external loops of the optical fiber may be parallel to the first layer, such as >50% of the loop, like >75%, excluding 100% (as in that case no external loop, i.e., a loop external of the plurality of layers of 3D printed material (see also further below), could exist), like selected from the range of 55-98%.

After providing the optical fiber on the first layer, as described above, the second layer is provided on the first layer and (on) part of the optical fiber. Especially, in embodiments, the optical fiber may be recessed in the first layer, such that the optical fiber and the first layer provide a smooth contact surface for the second layer, i.e., the optical fiber may be fully recessed in the first layer. In other embodiments, the optical fiber may be recessed partly in the first layer, such that the optical fiber may protrude from the first layer to provide a (slightly) textured contact surface for the second layer. In yet other embodiments, the optical fiber may be provided on the first layer without being recessed in the first layer. In such embodiments, the second layer may be provided over the first layer and the optical fiber such that the optical fiber is (essentially fully) recessed in the second layer.

In embodiments, the layers of 3D printed material may each have layer height (H), see also further below. Especially, the layer height (H) may be individually selected for each of the plurality of layers of 3D printed material. In embodiments, the plurality of layers may have essentially the same layer height (H). However, in other embodiments, two or more layers of the plurality of layers may differ in their individually selected layer heights (H). Further, the optical fiber may, in embodiments, have a fiber diameter (D_{f}), especially defined in a plane perpendicular to a fiber length (L1) of the optical fiber (see also further below). The fiber diameter (D_{f}) may be selected from the range of 50-2000 µm, such as from the range of 100-1000 µm, like from the range of 100-500 µm. Especially, in embodiments, the fiber diameter (D_{f}) may be smaller than two layers of 3D printed material, i.e., the fiber diameter (D_{f}) may be smaller than twice the layer height (H). In embodiments, 0.05*H≤D_{f} <2*H, especially 0.1*H≤D_{f} <2*H, such as 0.2*H≤D_{f} ≤1.5*H, like 0.5*H≤D_{f} ≤1*H.

Further, as mentioned above, the method comprises executing the 3D printing stage and the k1 integration stages such that the optical fiber forms p external loops. Therefore, the method comprises executing two or more integration stages, i.e., k1≥2. For example, in embodiments, k1=2, such that the optical fiber may pass a set of layers (through a through hole) in a first direction, form a loop, and subsequently pass a set of layers (through another through hole), such as the same set of layers, in a second direction (different from the first direction). In such an example, k1=2 and p=1. Hence, there may be less loops than integration stages. According to the invention, 1≤p≤k1-1. In another example, in embodiments, k1=3, such that the optical fiber may pass a set of layers (through a first through hole) in a first direction, form a first loop, and subsequently pass a set of layers (through a second through hole), such as the same set of layers, in a second direction (different from the first direction). Subsequently, in such embodiments, the optical fiber may form a second loop, and subsequently pass a set of layers (through a third through hole), such as the same set of layers, in a third direction (different from the second direction). In embodiments, the method may comprise forming at least one loop, such as at least five loops, like at least ten loops. Hence, the method may comprise forming p loops, such that p≥1. Especially, p may be selected from the range of 1-100, like from the range of 4-100, especially from the range of 3-50, such as from the range of 1-15.

Hence, in embodiments, each loop may be defined between a set of two through holes. Especially, the optical fiber may loop outside of the plurality of layers (i.e., may form an external loop) and may be secured to the plurality of layers through the set of two through holes (i.e., the optical fiber may protrude the plurality of layers twice to form a loop). Therefore, in embodiments, the optical fiber may (i) extend from a first through hole, i.e., stick out from a first through hole, (ii) form a loop (or curve), and (iii) protrude into a second through hole. Similarly one may say, the optical fiber may (i) extend from a second through hole, i.e., stick out from the second through hole, (ii) form a loop (or curve), and (iii) protrude into a first through hole. Because the optical fiber forms a loop external of the plurality of layers, but is secured to the plurality of layers by integration through the two through holes, the optical fiber is thus partly integrated in the plurality of layers. In other words, the part of the optical fiber, but not the entire optical fiber, are incorporated between the plurality of layers of 3D printed material.

The two through holes of a single loop may, in embodiments, be configured in the same set of layers, i.e., the first layer and the second layer may be the same layers for the two through holes of a single loop. However, the two through holes of a single loop may, in embodiments, also be configured in a different set of layers, i.e., the first layer and the second layer may be different for the two through holes of a single loop. For example, in embodiments, a first through hole of a loop may be configured between a primary first layer and a primary second layer (i.e. a primary set of layers), while a second through hole of the same loop may be configured between a secondary first layer and a secondary second layer (i.e. a secondary set of layers). In embodiments, the primary first layer and the secondary first layer may be the same layer, and likewise, the primary second layer and the secondary second layer may be the same layer, i.e., the first through hole and the second through hole of a loop may be configured in the same set of layers. However, in other embodiments, e.g., the primary second layer may be the same layer as the secondary first layer, while the primary first layer and the secondary second layer may both be different layers. In yet other embodiments, the primary first layer, the primary second layer, the secondary first layer, and the secondary second layer may all be different (separate) layers, i.e., the first through hole and the second through hole of a loop may be configured in different sets of layers.

As indicated above, the method comprises depositing, during a printing stage, 3D printable material. Herein, the term "3D printable material" refers to the material to be deposited or printed, and the term "3D printed material" refers to the material that is obtained after deposition. These materials may be essentially the same, as the 3D printable material may especially refer to the material in a printer head or extruder at elevated temperature and the 3D printed material refers to the same material, but in a later stage when deposited. In embodiments, the 3D printable material may be printed as a filament and deposited as such. The 3D printable material may be provided as filament or may be formed into a filament. Hence, whatever starting materials are applied, a filament comprising 3D printable material may be provided by the printer head and 3D printed. The term "extrudate" may be used to define the 3D printable material downstream of the printer head, but not yet deposited. The latter may be indicated as "3D printed material". In fact, the extrudate may be considered to comprise 3D printable material, as the material is not yet deposited. Upon deposition of the 3D printable material or extrudate, the material may thus be indicated as 3D printed material. Essentially, the materials may be the same material, as the thermoplastic material upstream of the printer head, downstream of the printer head, and when deposited, may essentially be the same material(s).

Herein, the term "3D printable material" may also be indicated as "printable material". The term "polymeric material" may in embodiments refer to a blend of different polymers, but may in embodiments also refer to essentially a single polymer type with different polymer chain lengths. Hence, the terms "polymeric material" or "polymer" may refer to a single type of polymers but may also refer to a plurality of different polymers. The term "printable material" may refer to a single type of printable material but may also refer to a plurality of different printable materials. The term "printed material" may refer to a single type of printed material but may also refer to a plurality of different printed materials.

Hence, the term "3D printable material" may also refer to a combination of two or more materials. In general, these (polymeric) materials have a glass transition temperature (T_{g}) and/or a melting temperature (Tₘ). The 3D printable material will be heated by the 3D printer before it leaves the nozzle (see also further below) to a temperature of at least the glass transition temperature, and in general at least the melting temperature. Hence, in a specific embodiment the 3D printable material comprises a thermoplastic polymer having a glass transition temperature (T_{g}) and /or a melting point (Tₘ), and the printer head action may comprises heating the 3D printable material above the glass transition and in embodiments above the melting temperature (especially when the thermoplastic polymer is a semi-crystalline polymer). In yet another embodiment, the 3D printable material comprises a (thermoplastic) polymer having a melting point (Tₘ), and the 3D printing stage may comprise heating the 3D printable material to be deposited on the receiver item to a temperature of at least the melting point. The glass transition temperature is in general not the same thing as the melting temperature. Melting is a transition which may occur in crystalline polymers. Melting may happen when the polymer chains fall out of their crystal structures, and become a disordered liquid. The glass transition may be a transition which happens to amorphous polymers; that is, polymers whose chains are not arranged in ordered crystals, but are just strewn around in any fashion, even though they are in the solid state. Polymers can be amorphous, essentially having a glass transition temperature and not a melting temperature or can be (semi) crystalline, in general having both a glass transition temperature and a melting temperature, with in general the latter being larger than the former. The glass temperature may e.g. be determined with differential scanning calorimetry. The melting point or melting temperature can also be determined with differential scanning calorimetry.

The printable material may be printed on a receiver item. Especially, the receiver item can be the building platform or can be comprised by the building platform. The receiver item can also be heated during 3D printing. However, the receiver item may also be cooled during 3D printing.

The phrase "printing on a receiver item" and similar phrases include amongst others directly printing on the receiver item, or printing on a coating on the receiver item, or printing on 3D printed material earlier printed on the receiver item. The term "receiver item" may refer to a printing platform, a print bed, a substrate, a support, a build plate, or a building platform, etc... Instead of the term "receiver item" also the term "substrate" may be used. The phrase "printing on a receiver item" and similar phrases include amongst others also printing on a separate substrate on or comprised by a printing platform, a print bed, a support, a build plate, or a building platform, etc... Therefore, the phrase "printing on a substrate" and similar phrases include amongst others directly printing on the substrate, or printing on a coating on the substrate or printing on 3D printed material earlier printed on the substrate. Here below, further the term substrate is used, which may refer to a printing platform, a print bed, a substrate, a support, a build plate, or a building platform, etc., or a separate substrate thereon or comprised thereby.

Layer by layer printable material may be deposited, by which the 3D printed item may be generated (during the printing stage). The 3D printed item may show a characteristic ribbed structures (originating from the deposited filaments). However, it may also be possible that after a printing stage, a further stage is executed, such as a finalization stage. This stage may include removing the printed item from the receiver item and/or one or more post processing actions. One or more post processing actions may be executed before removing the printed item from the receiver item and/or one more post processing actions may be executed after removing the printed item from the receiver item. Post processing may include e.g. one or more of polishing, coating, adding a functional component, etc... Post-processing may include smoothening the ribbed structures, which may lead to an essentially smooth surface.

Especially, the 3D item comprises one or more layers of 3D printed material. More especially, the 3D item comprises a plurality of layers of 3D printed material. The 3D item may comprise two or more, like at least 5, such as at least 10, like in embodiments at least 20 layers of 3D printed material.

The 3D printed item may comprise a plurality of layers on top of each other, i.e. stacked layers. A width (thickness) (W) and height (H) of (individually 3D printed) layers may e.g. in embodiments be selected from the range of 100 - 5000 µm, such as 200-2500 µm, with the height (H) in general being smaller than the width (W). For instance, the ratio of height (H) and width (W) may be equal to or smaller than 0.8, such as equal to or smaller than 0.6.

Layers may be core-shell layers or may consist of a single material. Within a layer, there may also be a change in composition, for instance when a core-shell printing process was applied and during the printing process it was changed from printing a first material (and not printing a second material) to printing a second material (and not printing the first material).

At least part of the 3D printed item may include a coating.

Referring back to the optical fiber, the optical fiber may be transmissive for light. Especially, in embodiments, light provided to the optical fiber (by a light source) may propagate through the optical fiber. More especially, light propagating through the (leaky) optical fiber may escape from the optical fiber to external from the plurality of layers of 3D printed material. Especially, the light may comprise visible light, i.e. light having one or more wavelengths in the 380-780 nm wavelength range. For instance, the light may be white light and in other embodiments the light may be colored light. Other embodiments, however, like color controllable embodiments, may also be possible.

As the method comprises k1 integration stages, the optical fiber may be integrated into the plurality of layers of 3D printed material multiple times. In embodiments, the optical fiber may be provided to the plurality of layers of 3D printed material in essentially the same way for each of the k1 integration stages. However, in other embodiments, the optical fiber may be provided to the plurality of layers of 3D printed material in a different way for the k1 integration stages.

In the present invention the k1 integration stages comprise: (a) after providing the first layer of one of the n sets, providing the optical fiber on the first layer, such that the optical fiber extends from the first layer and protrudes into the first layer thereby forming the through hole, and (b) subsequently providing the second layer on the first layer and part of the optical fiber, such that part of the optical fiber resides in the through hole formed in the set of layers. Therefore, the optical fiber may be recessed in the first layer, such that the optical fiber and the first layer provide a smooth contact surface for the second layer. Hence, the through hole may be fully comprised in the first layer.

In other specific embodiments, at least one of the k1 integration stages may comprise: subsequently providing the second layer on the first layer and part of the optical fiber, such that the optical fiber also extends from the second layer, and also at least partly protrudes into the second layer, thereby forming another part of the through hole, and such that part of the optical fiber resides in the through hole provided by the layers of the set. Therefore, in such embodiments, the optical fiber may be recessed partly in the first layer, such that the optical fiber may protrude from the first layer to provide a (slightly) textured contact surface for the second layer. Hence, in such embodiments, the through hole may be partly comprised in the first layer and partly comprised in the second layer.

Such a method may provide the benefit of securely integrating the optical fiber in the 3D item. Especially, the optical fiber may be kept securely in place during the printing process due to the recession into the adjacent layers, i.e., movement of the optical fiber may be impaired.

Further, in embodiments, the printing conditions may be selected to obtain a specific result. Especially, in embodiments, during at least one of the k1 integration stages the printing conditions may be selected such that, while providing the optical fiber to the first layer, a temperature of the 3D printed material of the first layer at a position where the optical fiber is contacted with the 3D printed material may be above the melting temperature (Tₘ) of the 3D printed material. More especially, the temperature of the 3D printed material of the first layer at a position where the optical fiber is contacted with the 3D printed material may be at least 5 °C above the melting temperature (Tₘ) of the 3D printed material, such as at least 10 °C above the melting temperature (Tₘ) of the 3D printed material, like at least 20 °C above the melting temperature (Tₘ) of the 3D printed material, especially at least 30 °C above the melting temperature (Tₘ) of the 3D printed material.

Hence, in specific embodiments, the method may comprise selecting, during at least one of the k1 integration stages, the printing conditions such that while providing the optical fiber on the first layer, a temperature of the 3D printed material of the first layer at a position where the optical fiber is contacted with the 3D printed material may be above the melting temperature (Tₘ) of the 3D printed material.

Such embodiments may be beneficial for preventing defects in the 3D printed item due to the integration of fiber during the printing method. Further, such printing conditions may improve adhesion between layers of 3D printed material. Additionally, the 3D printed material may be relatively soft during integration stages with such conditions as described here, making it easier to integrate (e.g. press) the optical fiber into the layer of 3D printed material. Hence, such a method as described here may provide an improved method for incorporating optical fibers in 3D printed items.

In embodiments, the printing conditions may especially be selected such, that the 3D printed material may start annealing while still remaining ductile enough for the optical fiber to be pressed into the first layer. Hence, in embodiments, the 3D printed material of the first layer at the position where the optical fiber is contacted with the 3D printed material may have a temperature at least in the range of 30-50 °C above the glass transition temperature (T_{G}) of the 3D printed material. However, the glass transition temperature (T_{G}) of the 3D printed material is generally lower than the melting temperature (Tₘ) of the 3D printed material. Therefore, especially such that the optical fiber may be pressed at least partly into the first layer, in embodiments, the temperature of the 3D printed material of the first layer at the position where the optical fiber is contacted with the 3D printed material may be at least 10 °C above the melting temperature (Tₘ). Hence, in embodiments, for the 3D printed material at least one of the following may apply: (i) the temperature of the 3D printed material is between the glass transition temperature (T_{G}) and the melting temperature (Tₘ) of the material, and (ii) the temperature of the 3D printed material is (at least 10 °C) above the melting temperature (Tₘ) of the material. Especially, in embodiments where the temperature of the 3D printed material is above the melting temperature (Tₘ) of the material, a lower force may be needed for the optical fiber to be pressed into the 3D printed material.

Such conditions (i.e. temperatures) as described herein may be achieved, for example, by controlling (over time) the temperature of the nozzle of the 3D printing device being used. In another example, in embodiments, such conditions (i.e. temperatures) may be achieved through the (additional) use of a cooling device, see also further below. Alternatively or additionally, a heating device may be applied, like a hot air device or an IR radiator, etc.

In embodiments, the printing device may especially comprise a fused deposition modeling 3D printer. Therefore, in embodiments, the method may further comprise: using a fused deposition modeling 3D printer comprising (a) an optical fiber providing system, and (b) a substrate.

Especially, in embodiments, the optical fiber providing system may be configured to provide the optical fiber to the 3D printed material. As mentioned above, the optical fiber may be provided in a direction different from the printing direction, especially not coinciding the (local)longitudinal axis (A_{X}). Therefore, in embodiments, the optical fiber providing system may comprise an optical fiber positioning device configured to control the orientation and position of the optical fiber relative to the 3D printed material. For example, in embodiments, the optical fiber positioning system may comprise a robot arm configured to arrange the optical fiber in the desired orientation and position relative to the 3D printed material. The optical fiber positioning system may also, in embodiments, be configured to provide the optical fiber to the 3D printed material by working in a similar fashion to a sewing machine, i.e., implementing sewing machine mechanisms.

Further, in embodiments, the fused deposition 3D printer may comprise a substrate (see also below). The substrate may be configured to support the 3D printed material (and the integrated optical fiber). In embodiments, the substrate may comprise a (part of a) 3D item. Other embodiments regarding the substrate are described further below.

The fused deposition modeling 3D printer may thus be configured to provide, in embodiments, the optical fiber to the 3D printed material. Especially, in embodiments, the fused deposition modeling 3D printed may be configured to provide the p external loops of the optical fiber. More especially, the method may comprise: providing the p external loops by one or more of (i) the optical fiber positioning device, and (ii) the substrate. In embodiments, the one or more of (i) the optical fiber positioning device, and (ii) the substrate may be moved in a horizontal plane. Hence, in specific embodiments, the method may comprise using a fused deposition modeling 3D printer comprising (a) an optical fiber providing system configured to provide the optical fiber; wherein the optical fiber providing system may comprise an optical fiber positioning device, and (b) a substrate configured to support 3D printed material; wherein the method may comprise: providing the p external loops by moving one or more of (i) the optical fiber positioning device, and (ii) the substrate.

For example, in embodiments, the optical fiber positioning device may be configured to move (in a horizontal plane) relative to the substrate, while the substrate remains static. Hence, in such embodiments, the optical fiber may be moved to achieve its desired position. In another example, the optical fiber positioning device and the substrate may both move (in a horizontal plane) relative to each other, e.g., the optical fiber positioning device may, in embodiments, comprise the substrate. In yet another example, in embodiments, the substrate may be configured to move (in a horizontal plane) relative to the optical fiber positioning device, while the optical fiber positioning device remains static. Hence, in such embodiments, the substrate may be moved to achieve the placement of the optical fiber at its desired position. Especially, the optical fiber positioning device and/or the substrate may also be movable in a vertical direction. For instance, the optical fiber positioning device may be able to move in a vertical direction to position the optical fiber.

In embodiments, the optical fiber providing system may comprise a robotic arm configured to provide and/or position the optical fiber. Therefore, in embodiments, the optical fiber positioning device may (also) comprise a robotic arm. Especially, in embodiments, the optical fiber positioning device may essentially be a robotic arm. However, the skilled person will appreciate that other (types of) devices may also be applicable.

The optical fiber may, in embodiments, be integrated in the plurality of layers of 3D printed material in a random way, for example, in a (randomized) crisscross configuration. However, in other embodiments, the optical fiber may be integrated in the plurality of layers of 3D printed material in an ordered way, such as arranged in a pattern. Especially, the optical fiber may, in embodiments, be arranged in one or more of a coiled pattern, a weaved pattern, or a spiraled pattern. Especially, in some embodiments, the method may comprise integrating the optical fiber in an (ir)regular pattern by configuring one or more of the optical fiber positioning device and the substrate to result in said patterned integration of the optical fiber.

Such movement as described here may be controlled by the control system of the 3D printer, which may, in embodiments, be programmed to execute the method. In embodiments, the 3D printer may comprise a motor controlled by the control system and configured to convert electrical energy into mechanical movement (in a horizontal direction) of one or more of the above described components (of the 3D printer).

Furthermore, the optical fiber may not only be placed in a horizontally desired position, but as mentioned above, the optical fiber may also be recessed into the first layer on which it may be placed. Therefore, in embodiments, the fused deposition modeling 3D printer may further comprise a printer nozzle, see also further below. In embodiments, the method may comprise (vertically) pressing the optical fiber at least partly in the first layer. In specific embodiments, the method may (even) comprise pressing the optical fiber (essentially) fully in the first layer. Especially, the optical fiber may be pressed at least partly in the first layer by controlling a vertical position of one or more of (i) the printer nozzle, (ii) the optical fiber positioning device, and (iii) the substrate. Hence, in specific embodiments, the fused deposition modeling 3D printer may further comprise a printer nozzle; wherein the method may comprise: pressing the optical fiber at least partly in the first layer by controlling a vertical position of one or more of (i) the printer nozzle, (ii) the optical fiber positioning device, and (iii) the substrate.

With such embodiments, the optical fiber may be securely recessed in at least part of the surrounding layers, such that the optical fiber may remain at a desired position. Hence, such embodiments may provide the benefit of fixing the optical fiber in a desired position.

For example, in embodiments, the printer nozzle may be configured to move (in a vertical direction) relative to the substrate, while the substrate remains static. Hence, in such embodiments, the optical fiber may be pressed into the first layer (of a set of layers) of 3D printed material (printed on the substrate) by the printer nozzle to achieve recession of the optical fiber into the first layer (of a set of layers) of 3D printed material. Likewise in embodiments, in another example, the substrate may be configured to move (in a vertical direction) relative to the printer nozzle, while the printer nozzle remains static. Hence, in such embodiments, the optical fiber may be pressed into the first layer (of a set of layers) of 3D printed material to achieve the placement recession of the optical fiber into the first layer (of a set of layers) of 3D printed material. In yet another example, the optical fiber positioning device may, in embodiments, be configured to move (in a vertical direction) relative to the static substrate (and the printer nozzle). Hence, in such embodiments, the optical fiber may be pressed into the first layer (of a set of layers) of 3D printed material (printed on the substrate) by the optical fiber positioning device to achieve recession of the optical fiber into the first layer (of a set of layers) of 3D printed material (printed on the substrate). Further, in embodiments, (also) a combination of one or more of the printer nozzle, the optical fiber positioning device, and the substrate may be configured to move (in a vertical direction) relative to each other, such that the optical fiber may be pressed into the first layer (of a set of layers) of 3D printed material.

Such movement as described here may be controlled by the control system of the 3D printer, which may, in embodiments, be programmed to execute the method. In embodiments, the 3D printer may, comprise a motor controlled by the control system and configured to convert electrical energy into mechanical movement (in a vertical direction) of one or more of the above described components (of the 3D printer).

In embodiments, the term "pressing the optical fiber into the first layer of 3D printed material" and similar terms may refer to applying a pressure on the optical fiber or one or more other components, such that the optical fiber is forced to (slightly) indent the first layer of 3D printed material.

The pressure for pressing the optical fiber into the first layer (of a set of layers) of 3D printed material may at least depend on the desired amount of recession of the optical fiber into that first layer. As mentioned above, the optical fiber may have a (cross-sectional) fiber diameter (D_{F}) defined in a plane perpendicular to the fiber length (L1) of the optical fiber. In embodiments, the optical fiber may be pressed into the first layer (of a set of layers) of 3D printed material, such that at least 10% of the fiber diameter (D_{F}) of the optical fiber may be recessed into that first layer, such as that at least 25% of the fiber diameter (D_{F}) of the optical fiber may be recessed into that first layer, like that at least 50% of the fiber diameter (D_{F}) of the optical fiber may be recessed into that first layer. Especially, in embodiments, the optical fiber may be pressed into the first layer (of a set of layers) of 3D printed material, such that at least 75% of the fiber diameter (D_{F}) of the optical fiber may be recessed into that first layer, such as that at least 90% of the fiber diameter (D_{F}) of the optical fiber may be recessed into that first layer, like that at least 95% of the fiber diameter (D_{F}) of the optical fiber may be recessed into that first layer. In specific embodiments, (even) 100% of the fiber diameter (D_{F}) of the optical fiber may be recessed into the first layer (of a set of layers) of 3D printed material. Note that, when a higher percentage of the fiber diameter (D_{F}) of the optical fiber is desired to be recessed into the first layer (of a set of layers) of 3D printed material, the required pressure may be higher. On the other hand, when a lower percentage of the fiber diameter (D_{F}) of the optical fiber is desired to be recessed into the first layer (of a set of layers) of 3D printed material, the required pressure may be relatively low.

Furthermore, the above mentioned positioning of the optical fiber through movement in horizontal and/or vertical directions may (also) require changes in printing speed. Especially, in embodiments, during the 3D printing stage, the plurality of layers (of 3D printed material) may be provided at a first printing speed (V₁). In embodiments, the first printing speed (V₁) may be selected from the range of 15-150 mm/s, such as from the range of 50-150 mm/s. Additionally or alternatively, in embodiments, during the k1 integration stages, one or more of the first layer and the second layer may be provided at a second printing speed (V₂). In embodiments, the second printing speed (V₂) may be selected from the range of 15-150 mm/s, such as from the range of 20-100 mm/s. Especially, in embodiments, V₁≥V₂, such as V₁≥2V₂, like V₁≥3V₂.

As the optical fiber may be at least partly pressed into the first layer (of a set of layers) of 3D printed material, in embodiments, the optical fiber may have a recession part. Especially, the optical fiber may, in embodiments, have k1 recession parts. In embodiments, the k1 recession parts may each have a recession part length (L_{q}). The recession part length (L_{q}) may depend on the fiber angle (α_{F}). In embodiments where the optical fiber is integrated perpendicular (i.e. α_{F}=90°), to the (local) longitudinal axis (A_{X}), the recession part length (L_{q}) may be (essentially) equal to the layer width (W). In embodiments where the optical fiber is not integrated perpendicular (i.e. α_{F}≠90°) to the longitudinal axis (A_{X}), for the recession part length (L_{q}) may apply, L_{q}=W/sine(α_{F}).

Further, in embodiments, the optical fiber may have a (first) fiber length (L1). The fiber length (L1) may thus especially comprise the k1 recession part lengths (L_{q}) and p external loop lengths (Lₚ), see also further below. Hence, in embodiments, L1=k1*L_{q}+p*Lₚ. Especially, the fiber length (L1) may, in embodiments, be selected from the range of 5-300 cm, such as from the range of 10-200 cm. In some embodiments, the optical fiber may have a relatively large fiber length (L1), such as a fiber length (L1) of at least 100 cm, such as at least 150 cm. Especially, in such embodiments, (only) one optical fiber may be integrated in the 3D item, however, this may not necessarily be the case. In other embodiments, the optical fiber may have a relatively small fiber length (L1), such as a fiber length (L1) of at most 25 cm, such as at most 15 cm. In such embodiments, (even) one or more (separate) optical fibers may be integrated in the 3D item, such as 2-20 optical fibers, like 5-10 optical fibers. Note that, in such embodiments, each of the one or more optical fibers may have a fiber length (L1, L2, L3, etc.).

Hence, the phrase "the 3D item at least partly comprises the optical fiber", and similar phrases, may refer to the aspect that the optical fiber is partly integrated in the 3D item in the through hole. Hence, the optical fiber may be integrated in the 3D item over the k1 recession part lengths (L_{q}), and the remainder of the optical fiber may be external of the 3D printed material. In this way, an arrangement comprising the 3D item and the optical fiber is provided, wherein the optical fiber is at least partly integrated in the 3D item. Hence, the invention provides in embodiments a 3D printed item with integrated therein leaky optical fiber.

As indicated above, the optical fibers may form p external loops. Especially, in embodiments, the loop may be arranged external of the plurality of layers of 3D printed material. Hence, in embodiments, the external loop may not be covered by 3D printed material.

In embodiments, each of the p external loops may have an (individual) external loop length (Lₚ), wherein a loop may be bound between a set of two through holes. Therefore, in embodiments, the external loop length (Lₚ) may be defined as the length of the optical fiber from a first through hole to a second through hole in one set of through holes. Further, in embodiments, each of the p external loops may have a shortest distance (d2) between the (respective) through holes. In embodiments, the shortest distance (d2) between the (respective) through holes for an external loop may be defined in a plane through a first stack of layers at least comprising the one or more sets related to the respective external loop. Especially, in embodiments, the external loop length (Lₚ) may be larger than the smallest distance (d2). More especially, in embodiments, Lₚ≥1.05*d2, such as Lₚ≥1.5*d2, like, Lₚ≥2*d2. Especially, in embodiments, 1.05*d2≤ Lₚ≤π*d2. However, larger values may also be possible.

In embodiments, most of the fiber length (L1) may be arranged external of the plurality of layers of 3D printed material. Especially, in embodiments, at least 70% of the fiber length (L1) of the optical fiber may be comprised by the p external loops, such as at least 80%, like at least 90%, especially at least 95%. Hence, in embodiments, p*Lₚ ≥ 0.7*L1, especially p*Lₚ ≥ 0.9*L1. In other words, at most 30% of the fiber Length (L1) of the optical fiber may be comprised by the k1 recession parts, such as at most 20%, like at most 10%, especially at most 5%, and in (other embodiments especially at least 1%, such as at least about 2%. Hence, in embodiments, k1*L_{q}≤ 0.3*L1, especially, k1*L_{q}≤0.1*L1. Hence, in specific embodiments, each of the p external loops may have an external loop length (Lp), wherein each of the p external loops may have a shortest distance (d2) between the through holes, wherein the shortest distance (d2) between the through holes for an external loop may be defined in a plane through a first stack of layers at least comprising the one or more sets related to the respective external loop, wherein Lp>1.1*d2; and wherein at least 90% of a fiber length (L 1) of the optical fiber may be comprised by the p external loops.

As indicated above, the invention may thus provide a method comprising providing a filament of 3D printable material and printing during a printing stage said 3D printable material on a substrate, to provide said 3D item.

Materials that may especially qualify as 3D printable materials may be selected from the group consisting of metals, glasses, thermoplastic polymers, silicones, etc. Especially, the 3D printable material comprises a (thermoplastic) polymer selected from the group consisting of ABS (acrylonitrile butadiene styrene), Nylon (or polyamide), Acetate (or cellulose), PLA (poly lactic acid), terephthalate (such as PET polyethylene terephthalate), Acrylic (polymethylacrylate, Perspex, polymethylmethacrylate, PMMA), Polypropylene (or polypropene), Polycarbonate (PC), Polystyrene (PS), PE (such as expanded- high impact-Polythene (or polyethene), Low density (LDPE) High density (HDPE)), PVC (polyvinyl chloride) Polychloroethene, such as thermoplastic elastomer based on copolyester elastomers, polyurethane elastomers, polyamide elastomers polyolefine based elastomers, styrene based elastomers, etc.. Optionally, the 3D printable material may comprise a 3D printable material selected from the group consisting of Urea formaldehyde, Polyester resin, Epoxy resin, Melamine formaldehyde, and thermoplastic elastomer. Optionally, the 3D printable material may comprise a 3D printable material selected from the group consisting of a polysulfone. Elastomers, especially thermoplastic elastomers, may especially be interesting as they are flexible and may help obtaining relatively more flexible filaments comprising the thermally conductive material. A thermoplastic elastomer may comprise one or more of styrenic block copolymers (TPS (TPE-s)), thermoplastic polyolefin elastomers (TPO (TPE-o)), thermoplastic vulcanizates (TPV (TPE-v or TPV)), thermoplastic polyurethanes (TPU (TPU)), thermoplastic copolyesters (TPC (TPE-E)), and thermoplastic polyamides (TPA (TPE-A)).

Suitable thermoplastic materials, such as also mentioned in WO2017/040893, may include one or more of polyacetals (e.g., polyoxyethylene and polyoxymethylene), poly(C₁₋₆ alkyl)acrylates, polyacrylamides, polyamides, (e.g., aliphatic polyamides, polyphthalamides, and polyaramides), polyamideimides, polyanhydrides, polyarylates, polyarylene ethers (e.g., polyphenylene ethers), polyarylene sulfides (e.g., polyphenylene sulfides), polyarylsulfones (e.g., polyphenylene sulfones), polybenzothiazoles, polybenzoxazoles, polycarbonates (including polycarbonate copolymers such as polycarbonate-siloxanes, polycarbonate-esters, and polycarbonate-ester-siloxanes), polyesters (e.g., polycarbonates, polyethylene terephthalates, polyethylene naphtholates, polybutylene terephthalates, polyarylates), and polyester copolymers such as polyester-ethers), polyetheretherketones, polyetherimides (including copolymers such as polyetherimide-siloxane copolymers), polyetherketoneketones, polyetherketones, polyethersulfones, polyimides (including copolymers such as polyimide- siloxane copolymers), poly(C₁₋₆ alkyl)methacrylates, polymethacrylamides, polynorbornenes (including copolymers containing norbornenyl units), polyolefins (e.g., polyethylenes, polypropylenes, polytetrafluoroethylenes, and their copolymers, for example ethylene- alpha- olefin copolymers), polyoxadiazoles, polyoxymethylenes, polyphthalides, polysilazanes, polysiloxanes, polystyrenes (including copolymers such as acrylonitrile-butadiene-styrene (ABS) and methyl methacrylate-butadiene-styrene (MBS)), polysulfides, polysulfonamides, polysulfonates, polysulfones, polythioesters, polytriazines, polyureas, polyurethanes, polyvinyl alcohols, polyvinyl esters, polyvinyl ethers, polyvinyl halides, polyvinyl ketones, polyvinyl thioethers, polyvinylidene fluorides, or the like, or a combination comprising at least one of the foregoing thermoplastic polymers. Embodiments of polyamides may include, but are not limited to, synthetic linear polyamides, e.g., Nylon-6,6; Nylon-6,9; Nylon-6,10; Nylon-6,12; Nylon-11; Nylon-12 and Nylon-4,6, preferably Nylon 6 and Nylon 6,6, or a combination comprising at least one of the foregoing. Polyurethanes that can be used include aliphatic, cycloaliphatic, aromatic, and polycyclic polyurethanes, including those described above. Also useful are poly(C₁₋₆ alkyl)acrylates and poly(C₁₋₆ alkyl)methacrylates, which include, for instance, polymers of methyl acrylate, ethyl acrylate, acrylamide, methacrylic acid, methyl methacrylate, n-butyl acrylate, and ethyl acrylate, etc. In embodiments, a polyolefine may include one or more of polyethylene, polypropylene, polybutylene, polymethylpentene (and co-polymers thereof), polynorbornene (and co-polymers thereof), poly 1-butene, poly(3-methylbutene), poly(4-methylpentene) and copolymers of ethylene with propylene, 1-butene, 1-hexene, 1-octene, 1-decene, 4-methyl-l-pentene and 1-octadecene.

In specific embodiments, the 3D printable material (and the 3D printed material) may comprise one or more of polycarbonate (PC), polyethylene (PE), high-density polyethylene (HDPE), polypropylene (PP), polyoxymethylene (POM), polyethylene naphthalate (PEN), styrene-acrylonitrile resin (SAN), polysulfone (PSU), polyphenylene sulfide (PPS), and semi-crystalline polytethylene terephthalate (PET), acrylonitrile butadiene styrene (ABS), poly(methyl methacrylate) (PMMA), polystyrene (PS), and styrene acrylic copolymers (SMMA).

The term 3D printable material is further also elucidated below, but may especially refer to a thermoplastic material, optionally including additives, to a volume percentage of at maximum about 60%, especially at maximum about 30 vol.%, such as at maximum 20 vol.% (of the additives relative to the total volume of the thermoplastic material and additives).

The printable material may thus in embodiments comprise two phases. The printable material may comprise a phase of printable polymeric material, especially thermoplastic material (see also below), which phase is especially an essentially continuous phase. In this continuous phase of thermoplastic material polymer additives such as one or more of antioxidant, heat stabilizer, light stabilizer, ultraviolet light stabilizer, ultraviolet light absorbing additive, near infrared light absorbing additive, infrared light absorbing additive, plasticizer, lubricant, release agent, antistatic agent, anti-fog agent, antimicrobial agent, colorant, laser marking additive, surface effect additive, radiation stabilizer, flame retardant, anti-drip agent may be present. The additive may have useful properties selected from optical properties, mechanical properties, electrical properties, thermal properties, and mechanical properties (see also above).

The printable material in embodiments may comprise particulate material, i.e. particles embedded in the printable polymeric material, which particles form a substantially discontinuous phase. The number of particles in the total mixture may especially not be larger than 60 vol.%, relative to the total volume of the printable material (including the (anisotropically conductive) particles) especially in applications for reducing thermal expansion coefficient. For optical and surface related effect number of particles in the total mixture is equal to or less than 20 vol.%, such as up to 10 vol.%, relative to the total volume of the printable material (including the particles). Hence, the 3D printable material may especially refer to a continuous phase of essentially thermoplastic material, wherein other materials, such as particles, may be embedded. Likewise, the 3D printed material especially refers to a continuous phase of essentially thermoplastic material, wherein other materials, such as particles, are embedded. The particles may comprise one or more additives as defined above. Hence, in embodiments the 3D printable materials may comprises particulate additives.

Further, in embodiments, the 3D printable material (and the 3D printed material) may especially comprise a light transmissive polymer. Especially, the 3D printable material may be transmissive for visible light. For example, in embodiments, the 3D printable material (and the 3D printed material) may be a translucent polymer. Especially, in embodiments, the 3D printable material may be slightly light scattering. Hence, in embodiments, (visible) light leaking from the optical fiber may be transmitted and/or scattered by the plurality of layers of 3D printed material.

Such embodiments may provide decorative effects and other optical effects in the 3D printed item resulting from executing the method as light can get partially coupled into the 3D printed item.

Yet further, in embodiments, the 3D printable material (and the 3D printed material) may comprise reflective particles. Especially, in embodiments, such reflective particles may be configured around the through hole. However, this may not necessarily be the case, i.e., the reflective particles may not necessarily be limited around the through hole. In embodiments, the reflective particles may be configured to reflect (visible) light (leaking from the optical fiber) back into the optical fiber. Especially, in embodiments, the reflective particles may be specularly reflective for (visible) light (leaking from the optical fiber). Hence, in specific embodiments, the 3D printable material may comprise reflective particles configured around the through hole and configured to reflect light back into the optical fiber.

Such embodiments may be beneficial as the reflective particles may reflect light (leaking) from the optical fiber back to the optical fiber, such that the propagation of light through the optical fiber may be improved by reducing the loss of light inside the plurality of layers of 3D printed material.

The 3D printed material may, in embodiments, be diffuse reflective for (visible) light (leaking from the optical fiber). However, in embodiments, the 3D printed material may also be diffuse transparent relative to (visible) light (leaking from the optical fiber). The presence of reflective particles (in the 3D printed material) may contribute to the diffusing effect of the 3D printed material. In embodiments, the reflective particles may especially be specularly reflective for light leaking from the optical fiber, such that a sparkling effect may occur.

In embodiments, the reflective particles may have a spherical shape or may have a shape approximating a sphere. In other embodiments, the reflective particles may (also) have a flaked shape. Therefore, in embodiments, the reflective particles may have an average equivalent spherical diameter (D_{RP}). Especially, the average equivalent spherical diameter (D_{RP}) of the reflective particles may, in embodiments, be selected from the range of 1 nm - 1 mm, such as 0.01 µm - 1 mm, such as selected from the from the range of 0.1 µm - 500 µm, like selected from the range of 1 µm - 50 µm.

Further, in embodiments, the reflective particles may comprise a material reflective for visible light. Especially, in embodiments, the reflective particles may comprise one or more materials selected from the group comprising silver, aluminum and mica. For example, in embodiments, the reflective particles may be silver nanoparticles. In other embodiments, the reflective particles may be mica flakes.

The term "approximate" and its conjugations herein, such as in "to approximate a shape", refers to being nearly identical to, especially identical to, the following term, for example nearly identical to a circular segment or a semi-cylindrical shape. For example, a reflective particle may define a spherical particle but for a defect. Similarly, for example, a rounded shape defined by a reflective particle may not be perfectly round but slightly ellipsoidal. In particular, an object approximating a first shape may herein refer to: a first shape realization encompassing the object, wherein the first shape realization is defined as the smallest encompassing shape of the (2D or 3D, respectively) object wherein the first shape realization has the shape of the first shape, wherein a ratio of the area (volume) of the first shape realization to the area (volume) of the object is ≤ 1.2, especially ≤ 1.1, such as ≤1.05, especially ≤1.02. For instance, the reflective particle may approximate a spherical shape, wherein the first shape realization may be defined as the smallest encompassing spherical shape of the reflective particle, wherein a ratio of the volume of the first shape realization to the volume of the reflective particle is ≤ 1.2, especially, especially ≤ 1.1, such as ≤1.05, especially ≤1.02, including 1. Further, if the dimensions of the first shape are defined, the term approximate may refer to the object and the first shape being superimposable (in 2D or 3D, respectively) such that an intersection between the object and the first shape covers at least n% of the object and at least n% of the shape, wherein n is at least 90%, such as at least 95%, especially at least 98%, such as at least 99%, including 100%.

The equivalent spherical diameter (or ESD) (or "spherical equivalent diameter") of an (irregularly shaped) three-dimensional shape is the diameter of a sphere of equivalent volume. For instance, the equivalent spherical diameter of a cube with side a is SQRT[3]((6*a^3)/π). For a sphere, the diameter is the same as the equivalent spherical diameter. Would a sphere in an xyz-coordinate system with a diameter D be distorted to any other shape (in the xyz-coordinate system), without changing the volume size, then the equivalent spherical diameter of that shape would be D.

Further, in embodiments, it may be desirable that the 3D printed material comprises more reflective particles in a location (directly) surrounding the optical fiber than in the rest of the 3D printed material, i.e., a local concentration of reflective particles may be higher in a location closer to the optical fiber than in the rest of the 3D printed material. In such embodiments, light leaking from the optical fiber may be reflected back to the optical fiber by the reflective particles with efficient use of resources. Such a local higher concentration of reflective particles as described here may for example be achieved through 3D printing with two different printer nozzles, for two filaments with different concentrations of reflective particles. In another example, the 3D printer may comprise two filament providing devices, see also further below, for providing two filaments with different concentrations of reflective particles to the printer nozzle.

As the reflective particles may be configured to reflect light back into the optical fiber, it may be desired that the optical fiber may, in embodiments, comprise a light transmissive material. Especially, in embodiments, the optical fiber may be a leaky optical fiber comprising a material transmissive for visible light. Hence, in specific embodiments, the optical fiber may comprise one or more of glass, silica and a polymeric material different from the polymeric material defined in claim 8. In embodiments, the polymeric material may be different from the polymeric material as defined above for the 3D printable (and 3D printed) material. Yet in embodiments, this may not necessarily be the case. Further, in embodiments, the optical fiber may also comprise crystalline materials, such as sapphire.

In embodiments, the optical fiber may comprise a fiber core and a fiber cladding. Especially, the core may be surrounded by the cladding, or in other words, the cladding may be wrapped around the core. More especially, in embodiments, the cladding may comprise a material having a lower index of refraction than the material comprised by the core. Hence, in embodiments, the core and the cladding of the optical fiber may comprise a different material (composition). In this way, light may escape from the optical fiber via leaky modes. In yet other embodiments, the cladding may comprise a material having a higher index of refraction than the material comprised by the core, but also comprising openings. In this way, light may escape via the openings. Especially, the core and the cladding may comprise a different material (composition) comprising one or more of glass, silica, and polymeric material (different from the polymeric material as described above, see also above).

Going back to the method, as mentioned above, the method comprises k1 integration stages, wherein the printing conditions may be selected such that the 3D printed material of the first layer (of a set of layers) may have, at the position where the optical fiber is contacted with the 3D printed material, a temperature above the melting temperature (Tₘ) of the 3D printed material. It may be desired to, after at least one of the k1 integration stages, lower the temperature of the 3D printed material. This may be beneficial for securing the integrated optical fiber in place between the first layer and the second layer of 3Dd printed material. A too high temperature of 3D printed material may allow unwanted deformation in the 3D printed material and/or displacement of the optical fiber during subsequent stages of the method.

Hence, in embodiments, at least one of the k1 integration stages may be followed by a cooling stage, wherein during the cooling stage the second (integration) layer may be cooled. In specific embodiments, (even) each of the k1 integration stages may be followed by such a cooling stage, i.e., the method may comprise k1 cooling stages.

In embodiments, cooling of the second (integration) layer during a cooling stage may refer to active cooling, passive cooling, or a combination thereof. For example, in embodiments, the cooling stage may comprise leaving the 3D printed material be for some time (such as a preprogrammed time period) to allow passive cooling of the second (integration) layer. In other embodiments, the cooling stage may comprise active cooling, e.g., using a cooling device, such as a (layer) fan, a water cooling device, or a blower. Hence, in embodiments, the method may comprise one or more cooling stages.

The herein described method provides 3D printed items. Hence, the invention also provides in a further aspect a 3D printed item obtainable with the herein described method.

In a further aspect a 3D printed item obtainable with the herein described method is provided.

The invention provides a 3D item produced by means of fused deposition modelling. The 3D item comprises a plurality of layers of 3D printed material and a partly integrated leaky optical fiber. The plurality of layers comprises n sets of two stacked layers, such as e.g. two adjacent stacked layers. Each set comprises a first layer and a second layer. The plurality of layers comprises at least one set of two stacked layers, i.e., n≥1. The optical fiber is partly integrated between the first layer and the second layer of one of the n sets such that the optical fiber extends from the first layer and at least partly protrudes into the first layer. Especially, the optical fiber thereby forms at least part of a through hole. More especially, part of the optical fiber resides in the through hole formed in the set of layers. The 3D printed item comprises k2 (of such) through holes. Further, in embodiments, at least two parts of the optical fiber may reside in at least two of the k2 through holes. In the 3D item, k2≥2. Further, the optical fiber forms p external loops, wherein 1≤p≤k2-1.

Hence, the invention provides a 3D item, wherein the 3D item comprises a plurality of layers of 3D printed material and a partly integrated leaky optical fiber, wherein the plurality of layers comprises n sets of two stacked layers, wherein each set comprises a first layer and a second layer, wherein n≥1; wherein the optical fiber is partly integrated between the first layer and the second layer of one of the n sets, such that the optical fiber extends from the first layer and at least partly protrudes into the first layer, thereby forming at least part of a through hole formed in the set of layers, wherein the 3D printed item comprises k2 through holes, wherein at least part of the optical fiber resides in the k2 through holes; wherein the optical fiber forms p external loops, wherein k2≥2, and wherein 1≤p≤k2-1.

Some specific embodiments in relation to the 3D printed item have already been elucidated above when discussing the method. Below, some specific embodiments in relation to the 3D printed item are discussed in more detail.

As indicated above, the optical fiber is partly integrated between the first layer and the second layer of one of the n sets. The optical fiber is integrated such that the optical fiber extends from the first layer and optionally the second layer. Additionally, in embodiments, the optical fiber may be integrated such that the optical fiber may at least partly protrude into the first layer and optionally into the second layer. Hence, the optical fiber may thereby form at least part of a through hole in the set of layers.

Especially, the 3D item comprises one or more layers of 3D printed material. More especially, the 3D item comprises a plurality of layers of 3D printed material. The 3D item may comprise two or more, like at least 5, such as at least 10, like in embodiments at least 20 layers of 3D printed material.

Hence, in general, the 3D printed item may comprise a plurality of layers on top of each other, i.e. stacked layers. The width (thickness) and height of (individually 3D printed) layers may e.g. in embodiments be selected from the range of 100 - 5000 µm, such as 200-2500 µm, with the height in general being smaller than the width. For instance, the ratio of height and width may be equal to or smaller than 0.8, such as equal to or smaller than 0.6.

Layers may be core-shell layers or may consist of a single material. Within a layer, there may also be a change in composition, for instance when a core-shell printing process was applied and during the printing process it was changed from printing a first material (and not printing a second material) to printing a second material (and not printing the first material).

At least part of the 3D printed item may include a coating.

As described above, the plurality of layers of 3D printed material may have a layer height (H). Furthermore, the optical fiber may have a fiber diameter (D_{f}). In embodiments, the layer height (H) may be larger than the fiber diameter (D_{f}). Especially, in embodiments, 0.05*H≤D_{f} <2*H, such as 0.1*H≤D_{f} <2*H.

Further, in embodiments, the optical fiber may have a (first) fiber length (L1), as described above. The fiber length (L1) may especially comprise the k1 recession part lengths (L_{q}) and p external loop lengths (Lₚ), see also further below. Hence, in embodiments, L1=k1*L_{q}+p*Lₚ.

Yet further, as indicated above, the optical fibers form p external loops. In embodiments, each of the p external loops may have an (individual) external loop length (Lₚ), wherein a loop may be defined between a set of two through holes. Especially, in embodiments, each of the p external loops may have a shortest distance (d2) between the (respective) through holes, as defined above. Especially, in embodiments, the external loop length (Lₚ) may be larger than the smallest distance (d2), i.e., Lₚ≥1.1*d2.

In embodiments, most of the fiber length (L1) may be arranged external of the plurality of layers of 3D printed material. Especially, in embodiments, p*Lₚ ≥ 0.9*L1. In other words, in embodiments, k1*L_{q}≤ 0.1*L1. Hence, in specific embodiments, each of the p external loops may have an external loop length (Lp), wherein each of the p external loops may have a shortest distance (d2) between the through holes, wherein the shortest distance (d2) between the through holes for an external loop may be defined in a plane through a first stack of layers at least comprising the one or more sets related to the respective external loop, wherein Lp>1.1*d2; and wherein at least 90% of a fiber length (L1) of the optical fiber may be compromised by the p external loops. In embodiments, the loop length (Lp) may be at least about 2 mm, such as at least about 5 mm, like in embodiments at least about 8 mm. In general, the loop length (Lp) will not be larger than 150 mm, such as at maximum 100 mm, though other values are herein not excluded.

In embodiments, the optical fiber may be arranged in the plurality of layers of 3D printed material in a random way, for example, in a (randomized) crisscross configuration. However, in other embodiments, the optical fiber may be integrated in the plurality of layers of 3D printed material in an ordered way, such as arranged in a pattern. Especially, the optical fiber may, in embodiments, be arranged in one or more of a coiled pattern, a weaved pattern, or a spiraled pattern.

For example, the optical fiber may, in embodiments, be weaved through the plurality of layers of 3D printed material in a regular manner, such that the shortest distance (d2) and the external loop length (Lₚ) may be the same for every one of the p loops. However, in other embodiments, the optical fiber may also be weaved through the plurality of layers of 3D printed material in an irregular manner, such that the shortest distance (d2) and the external loop length (Lₚ) may be different for the p different loops. In another example, the optical fiber may be integrated in the plurality of layers of 3D printed material, such that the optical fiber may form a (partial) coil around the 3D printed material.

Different configurations of optical fiber in the 3D printed item may be beneficial as they may provide different decorative effects in the 3D item. The different configurations may also result in a wide range of 3D items for different needs. For example, a 3D item comprising (tightly) coiled optical fiber may provide a beneficial combination of space efficiency and light intensity, whereas a 3D item comprising a weaved optical fiber with (varying) external loop lengths may provide a beneficial combination of decorative appeal and practical use.

Decorative and/or optical effects may also be achieved through choice of materials. The 3D printed material may comprise a polymeric material, see also above. In embodiments, the 3D printed material may especially comprise a light transmissive polymer. Especially, the 3D printable material may be transmissive for visible light, such as visible light that, during an operational mode of the 3D item, may leak from the optical fiber out of the 3D item.

Yet further, in embodiments, the 3D printed material may comprise reflective particles. Especially, in embodiments, such reflective particles may be configured around one or more of the k2 through holes. In embodiments, the reflective particles may be configured to, during an operational mode of the 3D item, reflect (visible) light (leaking from the optical fiber) back into the optical fiber. Therefore, in embodiments, the 3D (printed) item may especially comprise a higher concentration of reflective particles at a location in the plurality of layers around the optical fiber. Hence, in specific embodiments, the 3D printable material may comprise reflective particles configured around the through hole and configured to reflect light back into the optical fiber.

Hence, in embodiments, the optical fiber may comprise a light transmissive material, such that, in an operational mode of the 3D item (visible) light provided to the optical fiber may leak to outside of the optical fiber. Especially, in embodiments, the optical fiber may comprise, as also described above, one or more of glass, silica, and a polymeric material different from the polymeric material defined for the 3D printed material.

Hence, the leaky optical fiber may be design such that light propagating through the optical fiber leaks from the fiber over a part of its length, especially over its entire length. In this way, an extended (fiber) light source may be provided.

As described here, the 3D item may, in embodiments, have an operational mode. Thus, in embodiments, the (with the herein described method) obtained 3D printed item may be functional per se. For instance, the 3D printed item may be a lens, a collimator, a reflector, etc... The thus obtained 3D item may (alternatively) be used for decorative or artistic purposes. The 3D printed item may include or be provided with a functional component. The functional component may especially be selected from the group consisting of an optical component, an electrical component, and a magnetic component. The term "optical component" especially refers to a component having an optical functionality, such as a lens, a mirror, a light transmissive element, an optical filter, etc... The term optical component may also refer to a light source (like a LED). The term "electrical component" may e.g. refer to an integrated circuit, PCB, a battery, a driver, but also a light source (as a light source may be considered an optical component and an electrical component), etc. The term magnetic component may e.g. refer to a magnetic connector, a coil, etc... Alternatively, or additionally, the functional component may comprise a thermal component (e.g. configured to cool or to heat an electrical component). Hence, the functional component may be configured to generate heat or to scavenge heat, etc...

As indicated above, the 3D printed item maybe used for different purposes. Amongst others, the 3D printed item maybe used in lighting.

Hence, in yet a further aspect the invention also provides a lighting device comprising the 3D item as defined herein.

In a specific aspect the invention provides a lighting system comprising (a) a light source configured to provide (visible) light source light and (b) the 3D item as defined herein, wherein the optical fiber is configured in a light receiving relationship with the light source.

Hence, in embodiments, the lighting device may especially comprise a light source configured to provide light source light to the optical fiber. The light source may, in embodiments, comprise a solid state light source, such as a laser light source or an LED light source, however, other types of light sources are herein not excluded. The light source may especially be configured to provide visible light source light. For example, in embodiments, the light source may be configured to provide white light source light. In other embodiments, the light source may be configured to provide colored light source light. Furthermore, in embodiments, the 3D item may be configured as one or more of (i) at least part of a housing, and (ii) at least part of a wall of a lighting chamber.

Hence, in a further aspect the invention provides a lighting device comprising the 3D item as described herein and a light source configured to provide visible light source light, wherein the optical fiber is configured in a light receiving relationship with the light source, wherein the 3D item is configured as one or more of (i) at least part of a lighting device housing, and (ii) at least part of a wall of a lighting chamber.

As a relatively smooth surface may be provided, the 3D printed item (also) may be used as mirror or lens, etc... In embodiments, the 3D item may be configured as shade. A device or system may comprise a plurality of different 3D printed items, having different functionalities.

Returning to the 3D printing process, a specific 3D printer may be used to provide the 3D printed item described herein.

Therefore, in yet a further aspect the invention also provides a fused deposition modeling 3D printer, comprising (a) a printer head comprising a printer nozzle, (b) a 3D printable material providing device configured to provide 3D printable material to the printer head, (c) an optical fiber providing system configured to provide an optical fiber, comprising an optical fiber positioning device, (d) a substrate configured to support 3D printed material, and (e) a control system; wherein the control system is configured to execute the method as described herein for printing a 3D item as described herein.

Especially, the fused deposition modeling 3D printer is configured to provide said 3D printable material to the substrate according to the method as described herein.

Furthermore, in an operational mode, the fused deposition modeling 3D printer is configured to provide p external loops of optical fiber. For example, the p external loops may be provided by moving (in a horizontal plane) one or more of (i) the optical fiber positioning device, and (ii) the substrate.

The fused deposition modeling 3D printer is configured to provide the optical fiber to the 3D printed material (according to the method as described herein), such that the optical fiber is at least partly recessed into a first layer of a set of layers of 3D printed material.

For example, in embodiments, the printer nozzle of the fused deposition modeling 3D printer may be configured to apply a pressure to the optical fiber, such that the optical fiber is (slightly) pressed into the said first layer of 3D printed material.

In embodiments, the printer nozzle may include a single opening. In other embodiments, the printer nozzle may be of the core-shell type, having two (or more) openings. The term "printer head" may also refer to a plurality of (different) printer heads; hence, the term "printer nozzle" may also refer to a plurality of (different) printer nozzles. Likewise, the term "optical fiber positioning device" may also refer to a plurality of (different) optical fiber positioning devices. For example, in embodiments, the optical fiber providing system may comprise a first optical fiber positioning device configured to position the optical fiber in a horizontal plane, and a second optical fiber positioning device configured to position the optical fiber in a vertical direction. In another example, in embodiments, the optical fiber positioning system may comprise a robot arm configured to arrange the optical fiber in the desired orientation and position relative to the 3D printed material. In yet another example, the optical fiber positioning system may also, in embodiments, be configured to provide the optical fiber to the 3D printed material by working in a similar fashion to a sewing machine, i.e., implementing sewing machine mechanisms.

Further, in embodiments, the fused deposition modeling 3D printer be configured to provide printing conditions (i.e. temperature) as desired for the method as described above. Therefore, the fused deposition modeling 3D printer may additionally comprise one or more of a cooling device as described above or a heating device, such as a hot air device or an IR radiator, etc.

Further, the 3D printable material providing device may provide a filament comprising 3D printable material to the printer head or may provide the 3D printable material as such, with the printer head creating the filament comprising 3D printable material. The 3D printable material providing device may in embodiments comprise a device, e.g. a spool or roller, for providing a filament comprising 3D printable material to the nozzle. Additionally or alternatively, the 3D printable material providing device may in embodiments comprise a supply or storage device, such as a container, comprising pellets comprising 3D printable material that may be provided to the nozzle.

Hence, the invention provides a fused deposition modeling 3D printer, comprising (a) a printer head comprising a printer nozzle, (b) a filament providing device configured to provide a filament comprising 3D printable material to the printer head, (c) an optical fiber providing system configured to provide an optical fiber, comprising an optical fiber positioning device, (d) a substrate configured to support 3D printed material, and (e) a control system configured to execute the method as described herein.

Hence, especially, the 3D printer comprises a controller that is configured to execute in a controlling mode (or "operation mode") the method as described herein. Instead of the term "controller" also the term "control system" (see e.g. above) may be applied.

The term "controlling" and similar terms especially refer at least to determining the behavior or supervising the running of an element. Hence, herein "controlling" and similar terms may e.g. refer to imposing behavior to the element (determining the behavior or supervising the running of an element), etc., such as e.g. measuring, displaying, actuating, opening, shifting, changing temperature, etc.. Beyond that, the term "controlling" and similar terms may additionally include monitoring. Hence, the term "controlling" and similar terms may include imposing behavior on an element and also imposing behavior on an element and monitoring the element. The controlling of the element can be done with a control system, which may also be indicated as "controller". The control system and the element may thus at least temporarily, or permanently, functionally be coupled. The element may comprise the control system. In embodiments, the control system and element may not be physically coupled. Control can be done via wired and/or wireless control. The term "control system" may also refer to a plurality of different control systems, which especially are functionally coupled, and of which e.g. one control system may be a master control system and one or more others may be slave control systems. A control system may comprise or may be functionally coupled to a user interface.

The control system may also be configured to receive and execute instructions form a remote control. In embodiments, the control system may be controlled via an App on a device, such as a portable device, like a Smartphone or I-phone, or a tablet. The device is thus not necessarily coupled to the lighting system, but may be (temporarily) functionally coupled to the lighting system.

Hence, in embodiments the control system may (also) be configured to be controlled by an App on a remote device. In such embodiments the control system of the lighting system may be a slave control system or control in a slave mode. For instance, the lighting system may be identifiable with a code, especially a unique code for the respective lighting system. The control system of the lighting system may be configured to be controlled by an external control system which has access to the lighting system on the basis of knowledge (input by a user interface of with an optical sensor (e.g. QR code reader) of the (unique) code. The lighting system may also comprise means for communicating with other systems or devices, such as on the basis of Bluetooth, WIFI, LiFi, ZigBee, BLE or WiMAX, or another wireless technology.

The system, or apparatus, or device may execute an action in a "mode" or "operation mode" or "mode of operation". Likewise, in a method an action or stage, or step may be executed in a "mode" or "operation mode" or "mode of operation" or "operational mode". The term "mode" may also be indicated as "controlling mode". This does not exclude that the system, or apparatus, or device may also be adapted for providing another controlling mode, or a plurality of other controlling modes. Likewise, this may not exclude that before executing the mode and/or after executing the mode one or more other modes may be executed.

However, in embodiments a control system may be available, that is adapted to provide at least the controlling mode. Would other modes be available, the choice of such modes may especially be executed via a user interface, though other options, like executing a mode in dependence of a sensor signal or a (time) scheme, may also be possible. The operation mode may in embodiments also refer to a system, or apparatus, or device, which can only operate in a single operation mode (i.e. "on", without further tunability).

Instead of the term "fused deposition modeling (FDM) 3D printer" shortly the terms "3D printer", "FDM printer" or "printer" may be used. The printer nozzle may also be indicated as "nozzle" or sometimes as "extruder nozzle".

### BRIEF DESCRIPTION OF THE DRAWINGS

Embodiments of the invention will now be described, by way of example only, with reference to the accompanying schematic drawings in which corresponding reference symbols indicate corresponding parts, and in which:
Figs. 1A-1C schematically depict some general aspects of a 3D printer and of 3D printed material.
Figs. 2A-2B schematically depict some aspects of a method and some further aspects of a 3D printer.
Fig. 3 schematically depicts some aspects of a 3D item.
Figs. 4A-4B schematically depicts some further aspects of a method and a corresponding 3D item.

The schematic drawings are not necessarily to scale.

### DETAILED DESCRIPTION OF THE EMBODIMENTS

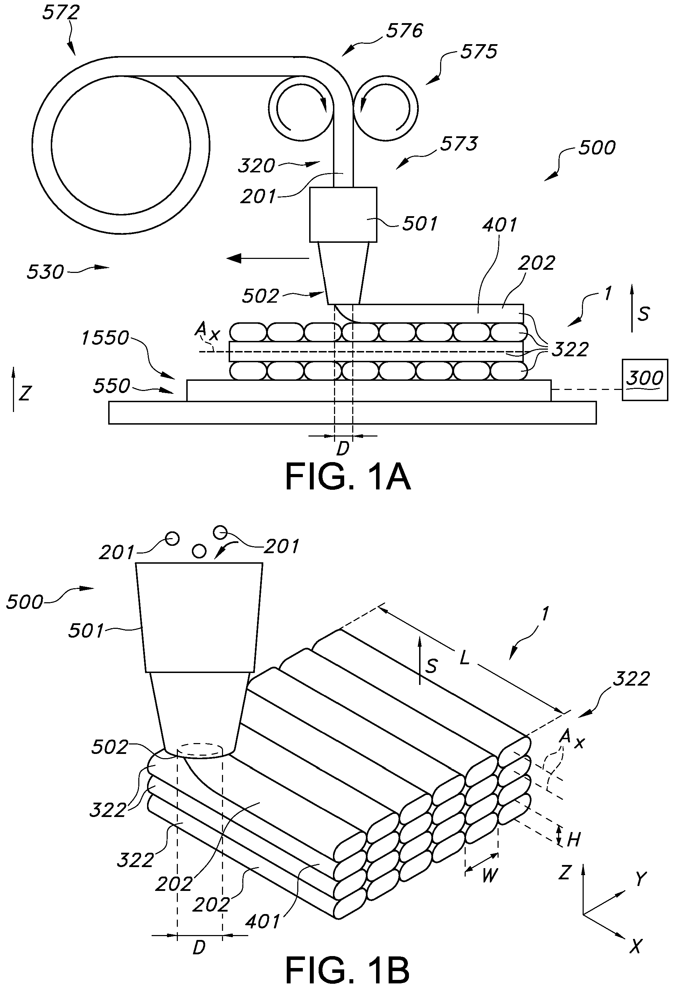

Fig. 1A schematically depicts some aspects of the 3D printer. Reference 500 indicates a 3D printer. Reference 530 indicates the functional unit configured to 3D print, especially FDM 3D printing; this reference may also indicate the 3D printing stage unit. Here, only the printer head for providing 3D printed material, such as an FDM 3D printer head is schematically depicted. Reference 501 indicates the printer head. The 3D printer of the present invention may especially include an optical fiber providing system 602, see also further below. Reference 502 indicates a printer nozzle. Reference 320 indicates a filament of printable 3D printable material 201.

Instead of a filament also pellets may be used as 3D printable material 201. Both can be extruded via the printer nozzle 502.

For the sake of clarity, not all features of the 3D printer 500 have been depicted, only those that are of especial relevance for the present invention (see further also below). Reference 321 indicates extrudate (of 3D printable material 201).

The 3D printer 500 is configured to generate a 3D item 1 by layer-wise depositing on a receiver item 550, which may in embodiments at least temporarily be cooled, a plurality of layers 322 wherein each layer 322 comprises 3D printable material 201, such as having a melting point Tₘ. The 3D printable material 201 may be deposited on a substrate 1550 (during the printing stage). By deposition, the 3D printable material 201 has become 3D printed material 202. 3D printable material 201 escaping from the nozzle 502 is also indicated as extrudate 321. Reference 401 indicates thermoplastic material.

The 3D printer 500 may be configured to heat the filament 320 material upstream of the printer nozzle 502. This may e.g. be done with a device comprising one or more of an extrusion and/or heating function. Such device is indicated with reference 573 and is arranged upstream from the printer nozzle 502 (i.e. in time before the filament material leaves the printer nozzle 502). The printer head 501 may (thus) include a liquefier or heater. Reference 201 indicates printable material. When deposited, this material is indicated as (3D) printed material, which is indicated with reference 202.

Reference 572 indicates a spool or roller with material, especially in the form of a wire, which may be indicated as filament 320. The 3D printer 500 transforms this in an extrudate 321 downstream of the printer nozzle which becomes a layer 322 on the receiver item or on already deposited printed material. In general, the diameter of the extrudate 321 downstream of the nozzle 502 is reduced relative to the diameter of the filament 320 upstream of the printer head 501. Hence, the printer nozzle 502 is sometimes (also) indicated as extruder nozzle. Arranging layer 322 by layer 322 and/or layer 322 on layer 322, a 3D item 1 may be formed. Reference 575 indicates the filament providing device, which here amongst others includes the spool or roller and the driver wheels, indicated with reference 576.

Reference Ax indicates a longitudinal axis or filament axis. Printing may especially occur along a printing direction, which may especially coincide with the longitudinal axis A_{X}. Further, reference S indicates a direction for the layer-wise deposition (i.e., a building direction), such that a stack 340 of layers 322 of 3D printed material 202 may be provided.

Reference 300 schematically depicts a control system. The control system may be configured to control the 3D printer 500. The control system 300 may be comprised or functionally coupled to the 3D printer 500. The control system 300 may further comprise or be functionally coupled to a temperature control system configured to control the temperature of the receiver item 550 and/or of the printer head 501. Such temperature control system may include a heater which is able to heat the receiver item 550 to at least a temperature of 50 °C, but especially up to a range of about 350 °C, such as at least 200 °C.

Alternatively or additionally, in embodiments the receiver plate may also be moveable in one or two directions in the x-y plane (horizontal plane). Further, alternatively, or additionally, in embodiments the receiver plate may also be rotatable about z axis (vertical). Hence, the control system may move the receiver plate in one or more of the x-direction, y-direction, and z-direction.

Alternatively, the printer 500 can have a head that can also rotate during printing. Such a printer 500 has an advantage that the printed material 202 cannot rotate during printing.

Layers are indicated with reference 322, and have a layer height H and a layer width W.

Note that the 3D printable material 201 is not necessarily provided as filament 320 to the printer head 501. Further, the filament 320 may also be produced in the 3D printer 500 from pieces of 3D printable material 201. Hence, the nozzle 502 may effectively produce from particulate 3D printable material 201 a filament 320, which upon deposition is indicated as layer 322 (comprising 3D printed material 202). Note that during printing the shape of the extrudate 321 may further be changed, e.g. due to the nozzle 502 smearing out the 3D printable material 201 / 3D printed material 202. Fig. 1B schematically depicts that also particulate 3D printable material 201 may be used as feed to the printer nozzle 502.

Reference D indicates the diameter of the nozzle 502 (through which the 3D printable material 201 is forced). However, the nozzle 502 is not necessarily circular.

Fig. 1B schematically depicts in 3D in more detail the printing of the 3D item 1 under construction. Here, in this schematic drawing the ends of the layers in a single plane are not interconnected, though in reality this may in embodiments be the case. Reference H indicates the height of a layer. Layers are indicated with reference 322. Here, the layers have an essentially circular cross-section. Often, however, they may be flattened, such as having an outer shape resembling a flat oval tube or flat oval duct (i.e. a circular shaped bar having a diameter that is compressed to have a smaller height than width, wherein the sides (defining the width) are (still) rounded).

Hence, Fig. 1A schematically depict some aspects of a fused deposition modeling 3D printer 500, comprising (a) a first printer head 501 comprising a printer nozzle 502, (b) a filament providing device 575 configured to provide a filament 320 comprising 3D printable material 201 to the first printer head 501, and optionally (c) a receiver item 550, which can be used to provide a layer of 3D printed material 202.

Fig. 1B schematically depict some aspects of a fused deposition modeling 3D printer 500 (or part thereof), comprising a first printer head 501 comprising a printer nozzle 502, and optionally a receiver item (not depicted), which can be used to which can be used to provide a layer of 3D printed material 202. Such fused deposition modeling 3D printer 500 may further comprise a 3D printable material providing device, configured to provide the 3D printable material 201 to the first printer head.

In Figs. 1A-1B, downstream of the nozzle 502, the filament 320 with 3D printable material becomes, when deposited, layer 322 with 3D printed material 202. In Fig. 1B, by way of example the extrudate is essentially directly the layer 322 of 3D printed material 202, due to the short distance between the nozzle 502 and the 3D printed material (or receiver item (not depicted).

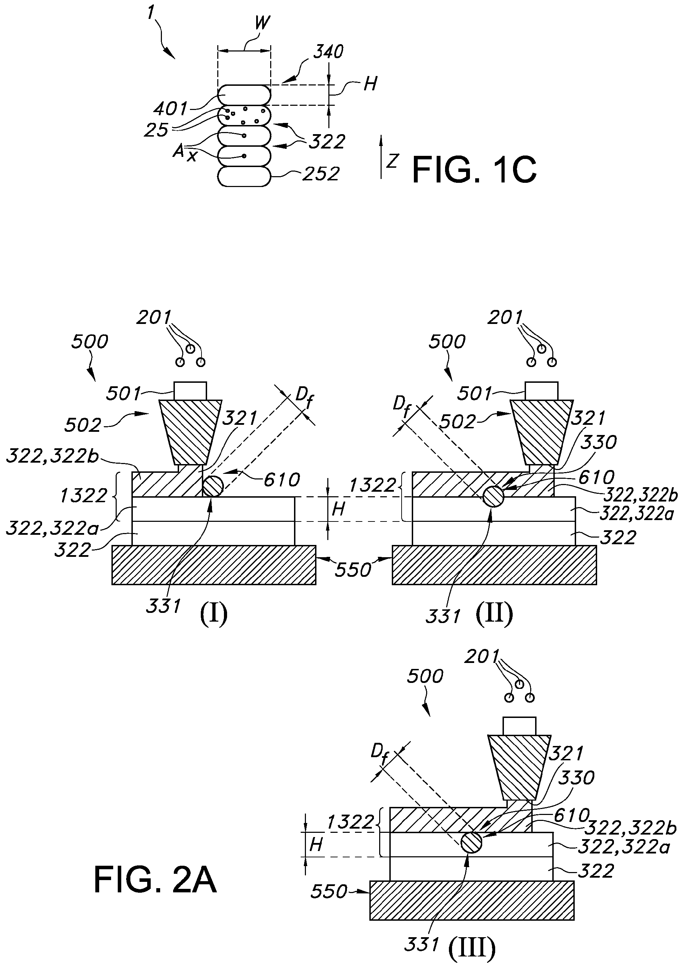

Fig. 1C schematically depicts a stack 340 of 3D printed layers 322, each having a layer height H and a layer width W. Note that in embodiments the layer width and/or layer height may differ for two or more layers 322. The layer width and/or layer height may also vary within a layer. Reference 252 in Fig. 1C indicates the item surface of the 3D item (schematically depicted in Fig. 1C).

Referring to Figs. 1A-1C, the filament of 3D printable material that is deposited leads to a layer having a height H (and width W). Depositing layer 322 after layer 322, the 3D item 1 is generated. Fig. 1C very schematically depicts a single-walled 3D item 1. Reference 25 may refer to reflective particles, see also above and further below.

Fig. 2A schematically depicts further embodiments of the invention that may relate to the method, the 3D item 1 and/or the fused deposition modeling 3D printer 500. Especially, Fig. 2A may schematically depict the method for producing a 3D item 1 by means of fused deposition modeling, especially by using the fused deposition modeling 3D printer 500. In embodiments, the 3D item 1 may also at least partly comprise an optical fiber 610. More especially, the optical fiber 610 may be a leaky optical fiber 610 partly integrated in the 3D item 1.

In embodiments, the depicted method may comprise a 3D printing stage. Especially, the 3D printing stage may comprise layer-wise depositing of an extrudate 321 comprising 3D printable material 201. Such layer-wise depositing may provide a plurality of layers 322 of 3D printed material 202. Especially, in embodiments, the plurality of layers 322 may comprise n sets 1322 of two stacked layers 322, e.g., two adjacent stacked layers. 322 In embodiments, each set 1322 may especially comprise a first layer 322a and a second layer 322b. The plurality of layers 322 of printed material 202 may especially comprise at least one set 1322 of two stacked layers 322, i.e., in embodiments, n≥1.

The depicted method may also, in embodiments, comprise k1 integration stages. In specific embodiments the method may comprise two or more integration stages, i.e., k1≥2. Especially, each integration stage may comprise after providing the first layer 322a of one of the n sets 1322, providing the optical fiber 610 on the first layer 322a (such as depicted in Fig. 2A subfigure I). Reference 331 may herein refer to the position where the optical fiber 610 is contacted with the 3D printed material 202 of the first layer 322a. In embodiments, the optical fiber 610 may be provided such that the optical fiber 610 may extend from the first layer 322a and at least partly protrude into the first layer 322a thereby forming at least part of a through hole 330. Subsequently, each integration stage may comprise providing the second layer 322b on the first layer 322a and part of the optical fiber 610 (see Fig. 2A subfigures I-III), such that part of the optical fiber 610 resides in the through hole 330 formed in the set 1322 of layers 322.

Further, in embodiments, the method may comprise executing the 3D printing stage and the k1 integration stages such that the optical fiber 610 forms p external loops 615. Especially, in embodiments, 1≤p≤k1-1.

In embodiments, the method may further, comprise a cooling stage. Especially, at least one or the k1 integration stages may be followed by a cooling stage. During the cooling stage, in embodiments, the second integration layer 322b may be cooled.

Further, in embodiments, during the 3D printing stage the plurality of layers 322 may be provided at a first printing speed V₁. Additionally or alternatively, in embodiments, during the k1 integration stages, one or more of the first layer 322a and the second layer 322b may be provided at a second printing speed (V₂). Especially, in embodiments, V₁≥V₂.

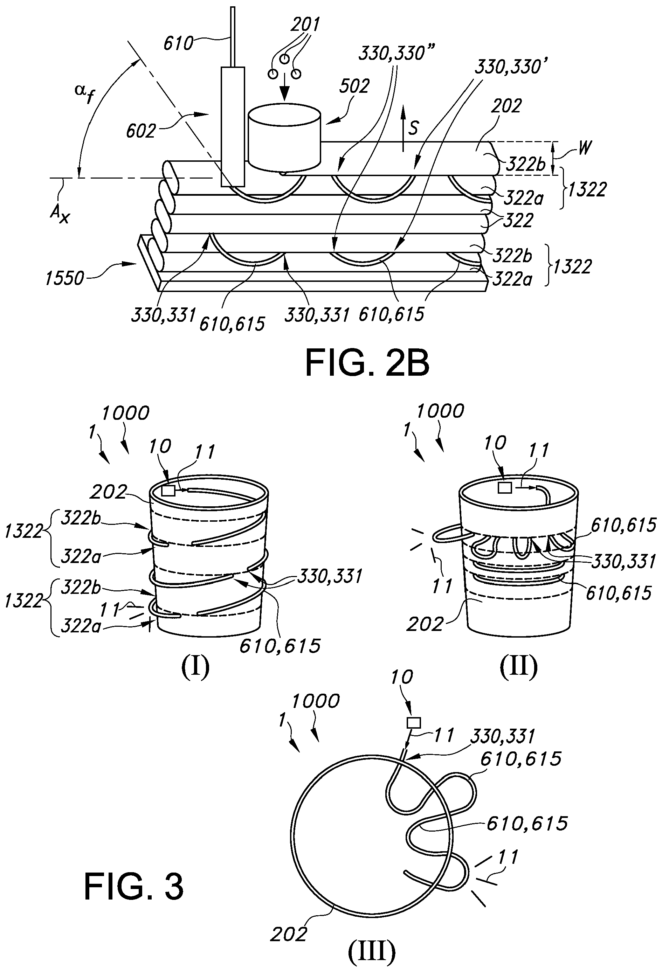

Fig. 2B schematically depicts further embodiments of the method and the fused depositing modeling 3D printer 500. In embodiments, during the method the optical fiber 610 may form p external loops 615, especially each loop 615 may be defined between a set of two through holes 330. The two through holes 330 of a single loop 615 may, in embodiments, be configured in the same set 1322 of layers 322, i.e., the first layer 322a and the second layer 322b may be the same layers 322 for the two through holes 330 of a single loop 615. However, the two through holes 330 of a single loop 615 may, in embodiments, also be configured in a different set 1322 of layers 322 , i.e., the first layer 322a and the second layer 322b may be different for the two through holes 330 of a single loop 615. An example of both above described situations is depicted in Fig. 2B. In embodiments, the 3D item 1 may especially comprise k2 through holes.

Further, as mentioned above, the optical fiber 610 may be provided on the first layer 322a (of a set 1322 of stacked layers 322). Especially, in embodiments, the optical fiber 610 may be provided not (anti-)parallel to the longitudinal axis A_{X} of the first layer 322a, such as perpendicular to the longitudinal axis A_{X} of the first layer 322a. Hence, in embodiments, the optical fiber 610 may be provided under a fiber angle α_{F} relative to the longitudinal axis A_{X}, wherein the fiber angle α_{F} may be defined in a plane parallel to the above described x-y plane (or horizontal plane). In other words, the fiber angle α_{F}, and hence the longitudinal axis A_{X}, may be defined in a plane perpendicular to the (building) direction S. Especially, in embodiments, αF≠0°, such as 10°≤α_{F}≤90°.

As depicted in Fig. 2A subfigure II the optical fiber 610 may be recessed partly in the first layer 322a, such that the optical fiber 610 may protrude from the first layer 322a to provide a (slightly) textured contact surface for the second layer 322b. In other words, the optical fiber 610 protrudes from the first layer 322a, such that during deposition of the second layer 322b the 3D printable material 201 is molded around the protrusion. Hence, the method as depicted here is such, that at least one of the k1 integration stages comprises: (a) after providing the first layer 322a of one of the n sets 1322, providing the optical fiber 610 on the first layer 322a, such that the optical fiber 610 extends from the first layer 322a and protrudes into the first layer322a thereby forming the through hole 330, and (b) subsequently providing the second layer 322b on the first layer 322a and part of the optical fiber 610, such that part of the optical fiber 610 resides in the through hole 330 formed in the set of layers 1322. However, in embodiments, such as depicted in Fig. 2A subfigure III the optical fiber 610 may also be recessed in the first layer 322a, such that the optical fiber 610 and the first layer 322a provide a smooth contact surface for the second layer 322b, i.e., the optical fiber 610 may be fully recessed in the first layer 322a. In other words, the optical fiber 610 is recessed in the first layer 322a, such that during deposition of the second layer 322b the 3D printable material 201 is deposited on a (substantially) level surface formed by the first layer 322a and the optical fiber 610. Hence, the method as depicted here may be such that at least one of the k1 integration stages may comprise: subsequently providing the second layer 322b on the first layer 322a and part of the optical fiber 610, such that the optical fiber 610 also extends from the second layer 322b, and also at least partly protrudes into the second layer 322b, thereby forming another part of the through hole 330, and such that part of the optical fiber 610 resides in the through hole 330 provided by the layers 322 of the set 1322.

Especially, in embodiments, the optical fiber 610 may be smaller than two layers 322 of 3D printed material 202, especially, the optical fiber 610 may have a fiber diameter D_{f}. In embodiments, the fiber diameter (Df) may be a cross sectional diameter defined in a plane perpendicular to a fiber length (L1) of the optical fiber 610. Especially, in embodiments, the fiber diameter D_{f} may be smaller than twice the layer height H, such as 0.05 *H≤D_{f} <2*H, especially, 0.1 *H≤D_{f} <2*H.

Further, in embodiments, during at least one of the k1 integration stages the printing conditions may be selected to obtain a specific result. Especially, in embodiments, the printing conditions may be selected such that, while providing the optical fiber 610 to the first layer 322a, a temperature of the 3D printed material 202 of the first layer 322a at the position 331 where the optical fiber 610 is contacted with the 3D printed material 202 may be above the melting temperature (Tm) (see also above) of the 3D printed material 202.

As depicted in Fig. 2B, the method may comprise using a fused deposition modeling 3D printer 500 comprising an optical fiber providing system 602 configured to provide the optical fiber 610. Especially, the optical fiber providing system 602 may comprise an optical fiber positioning device (not depicted here). The 3D printer 500 may further comprise a substrate 1550 configured to support 3D printed material 202, such that the method may comprise: providing the p external loops 615 by moving (in a horizontal plane) one or more of (i) the optical fiber positioning device (comprised by the optical fiber providing system 602), and (ii) the substrate 1550.

As described above, in embodiments, the method may comprise (vertically) pressing the optical fiber 610 at least partly in the first layer 322a. In specific embodiments, the method may (even) comprise pressing the optical fiber 610 (essentially) fully in the first layer 322a. Especially, the optical fiber 610 may be pressed at least partly in the first layer 322a by controlling a vertical position of one or more of (i) the printer nozzle 502, (ii) the optical fiber positioning device (comprised by the optical fiber providing system 602), and (iii) the substrate 1550. Movement such as described here (in a horizontal plane and/or of a vertical position) have been described in more detail above and are not repeated here.

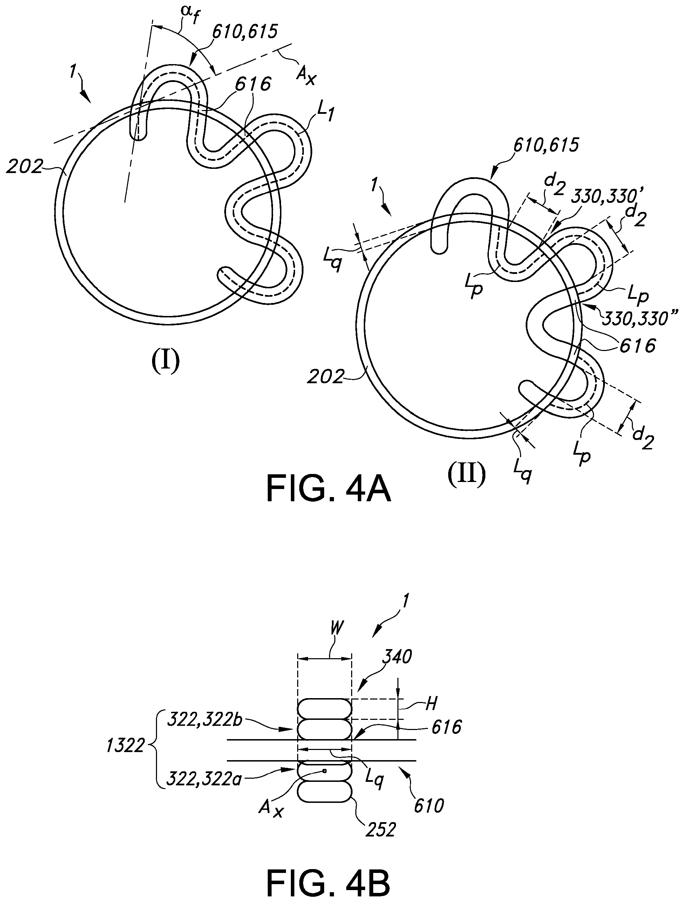

In a further aspect a 3D printed item 1 obtainable with the herein described method is provided. Especially, the invention may provide a 3D item 1 comprising 3D printed material 202. More especially, the invention may provide a 3D item 1 produced by means of fused deposition modelling. Fig. 3 and Figs. 4A-4B may provide schematic depictions of the 3D item 1. Embodiments of the 3D item 1 will be discussed in reference to Figs. 3 and 4.

The 3D item 1 may, in embodiments, comprise a plurality of layers 322 of 3D printed material 202 and an (partly integrated leaky) optical fiber 610. In embodiments, the plurality of layers 322 may comprise n sets 1322 of two stacked layers 322, such as described above. In embodiments, the optical fiber 610 may be partly integrated between the first layer 322a and the second layer 322b of one of the n sets 1322 such that the optical fiber 610 may extend from the first layer 322a and may at least partly protrude into the first layer 322a. Especially, the optical fiber 610 may thereby form at least part of a through hole 330. More especially, part of the optical fiber 610 may reside in the through hole 330 formed in the set 1322 of layers 322. As the optical fiber 610 may be at least partly pressed into the first layer 322a, in embodiments, the optical fiber 610 may have a recession part 616. Especially, the optical fiber 610 may, in embodiments, have k1 recession parts 616. In embodiments, the k1 recession parts 616 may each have a recession part length L_{q}. Especially, the recession part length L_{q} may be (essentially) equal to the layer width W.

Fig. 4A further schematically depicts, in embodiments, that the optical fiber 610 may have a (first) fiber length L1. The fiber length L1 may especially comprise the k1 recession part lengths L_{q} and p external loop lengths Lₚ, see also further below. Hence, in embodiments, L1=k1*L_{q}+p*Lₚ. Fig. 4A may especially schematically depict a cross-section of the 3D (printed) item 1, whereas Fig. 4B may schematically depict a cross-section of a stack 340 of layers 322 comprising the optical fiber 610.

In embodiments, the external loop length Lₚ may be defined as the length of the optical fiber 610 from a first through hole 330' to a second through hole 330" in one set of through holes 330. Further, in embodiments, each of the p external loops 615 may have a shortest distance d2 between the (respective) through holes 330',330". In embodiments, the shortest distance d2 between the (respective) through holes 330',330" for an external loop 615 may be defined in a plane through a first stack 340 of layers 322 at least comprising the one or more sets 1322 related to the respective external loop 615. Especially, in embodiments, the external loop length Lₚ may be larger than the smallest distance d2. More especially, in embodiments, Lₚ≥1.1*d2.

Furthermore, in embodiments, at least 90% of a fiber length L1 of the optical fiber 160 may be comprised by the p external loops 615. Hence, in embodiments, p*Lₚ ≥ 0.9*L1.

In embodiments, the optical fiber 610 may especially comprise a light transmissive material. Especially, in embodiments, the optical fiber 610 may comprise one or more of glass, silica and a polymeric material. Furthermore, in embodiments, the 3D printable material 201 as used during the herein described method and the 3D printed material 202 from the herein described 3D (printed) item 1 may comprise a light transmissive polymer.

Further, in embodiments, the 3D printable material 201 (and the 3D printed material 202) may comprise reflective particles 25 configured around one or more of the k2 through holes 330 and configured to reflect light 11 back into the optical fiber 610. The reflective particles 25 have been described in further detail above, which will not be repeated here.

Fig. 3 schematically depicts some examples of the 3D (printed) item 1. Especially, subfigure I schematically depicts a 3D (printed) item 1 obtained by the herein described method further comprising arranging the optical fiber 610 in a coiled pattern. Subfigure I schematically depicts a 3D (printed) item 1 obtained by the herein described method further comprising arranging at least part of the optical fiber 610 in a weaved pattern. Hence, in embodiments, the method may further comprise arranging the optical fiber 610 in one or more of a coiled pattern, a weaved pattern, or a spiraled pattern. However, other (ir)regular patterns are herein not excluded.

Further, Fig. 3 schematically depicts an application of the 3D (printed) item 1. Especially, Fig. 3 schematically depicts a lighting device 1000 comprising the 3D item 1 described herein, and a light source 10. The light source 10 may especially be configured to provide visible light source light 11. Therefore, in embodiments, the optical fiber 610 is functionally coupled to the light source 10, such that light source light 11 may propagate through the optical fiber 610. Hence, the 3D item 1 may be configured as a lighting device 1000. In other embodiments, not depicted here, the 3D item 1 may be configured as one or more of (i) at least part of a lighting device housing, and (ii) at least part of a wall of a lighting chamber.

The term "plurality" refers to two or more.

The terms "substantially" or "essentially" herein, and similar terms, will be understood by the person skilled in the art. The terms "substantially" or "essentially" may also include embodiments with "entirely", "completely", or "all". Hence, in embodiments the adjective substantially or essentially may also be removed. Where applicable, the term "substantially" or the term "essentially" may also relate to 90% or higher, such as 95% or higher, especially 99% or higher, even more especially 99.5% or higher, including 100%.

The term "comprise" includes also embodiments wherein the term "comprises" means "consists of".

The term "and/or" especially relates to one or more of the items mentioned before and after "and/or". For instance, a phrase "item 1 and/or item 2" and similar phrases may relate to one or more of item 1 and item 2. The term "comprising" may in an embodiment refer to "consisting of" but may in another embodiment also refer to "containing at least the defined species and optionally one or more other species".

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim.

Use of the verb "to comprise" and its conjugations does not exclude the presence of elements or steps other than those stated in a claim. Unless the context clearly requires otherwise, throughout the description and the claims, the words "comprise", "comprising", and the like are to be construed in an inclusive sense as opposed to an exclusive or exhaustive sense; that is to say, in the sense of "including, but not limited to".

The article "a" or "an" preceding an element does not exclude the presence of a plurality of such elements.

It goes without saying that one or more of the first (printable or printed) material and second (printable or printed) material may contain fillers such as glass and fibers which do not have (to have) influence on the on T_{g} or Tₘ of the material(s).

## Claims

1. A method for producing a 3D item (1) by means of fused deposition modelling, wherein the 3D item (1) also at least partly comprises a leaky optical fiber (610); the method comprising:
- a 3D printing stage, comprising layer-wise depositing 3D printable material (201), to provide a plurality of layers (322) of 3D printed material (202), wherein the plurality of layers (322) comprises n sets (1322) of two stacked layers (322), wherein each set (1322) comprises a first layer (322a) and a second layer (322b); wherein n≥1;
- k1 integration stages, wherein each integration stage comprises: (a) after providing the first layer (322a) of one of the n sets (1322), providing the optical fiber (610) on the first layer (322a), such that the optical fiber (610) extends from the first layer (322a) and at least partly protrudes into the first layer (322a) thereby forming at least part of a through hole (330), and (b) subsequently providing the second layer (322b) on the first layer (322a) and part of the optical fiber (610), such that part of the optical fiber (610) resides in the through hole (330) formed in the set (1322) of layers (322);
- executing the 3D printing stage and the k integration stages such that the optical fiber (610) forms p external loops (615), wherein k1≥2, and wherein 1≤p≤k1-1.

2. The method according to claim 1, wherein at least one of the k1 integration stages comprises: after providing the first layer (322a) of one of the n sets (1322), providing the optical fiber (610) on the first layer (322a), such that the optical fiber (610) extends from the first layer (322a) and protrudes into the first layer (322a) thereby forming the through hole (330), and (b) subsequently providing the second layer (322b) on the first layer (322a) and part of the optical fiber (610), such part of the optical fiber (610) resides in the through hole (330) formed in the set (1322) of layers (322).

3. The method according to claim 1, wherein at least one of the k1 integration stages comprises: subsequently providing the second layer (322b) on the first layer (322a) and part of the optical fiber (610), such that the optical fiber (610) also extends from the second layer (322b), and also at least partly protrudes into the second layer (322b), thereby forming another part of the through hole (330), and part of the optical fiber (610) resides in the through hole (330) provided by the layers (322a,322b) of the set (1322).

4. The method according to any one of the preceding claims, wherein during at least one of the k integration stages the printing conditions are selected such that while providing the optical fiber (610) on the first layer (322a), a temperature of the 3D printed material (202) of the first layer (322) at a position (331) where the optical fiber (610) is contacted with the 3D printed material (202) is above the melting temperature Tₘ of the 3D printed material (202).

5. The method according to any one of the preceding claims, further comprising: using a fused deposition modeling 3D printer (500) comprising (a) an optical fiber providing system (602) configured to provide the optical fiber (610); wherein the optical fiber providing system (602) comprises an optical fiber positioning device (603), and (b) a substrate (1550) configured to support 3D printed material (202); wherein the method comprises: providing the p external loops (615) by moving one or more of (i) the optical fiber positioning device (603), and (ii) the substrate (1550).

6. The method according to claim 5, wherein the fused deposition modeling 3D printer (500) further comprises a printer nozzle (502); wherein the method comprises:
pressing the optical fiber (610) at least partly in the first layer (322a) by controlling a vertical position of one or more of (i) the printer nozzle (502), (ii) the optical fiber positioning device (603), and (iii) the substrate (1550).

7. The method according to any one of the preceding claims, wherein each of the p external loops (615) has an external loop length (Lₚ), wherein each of the p external loops (615) has shortest distance (d2) between the through holes (330), wherein the shortest distance (d2) between the through holes (330) for an external loop (615) is defined in a plane through a first stack (340) of layers (322) at least comprising the one or more sets (1322) related to the respective external loop (615), wherein Lp>1.1*d2; and wherein at least 90% of a fiber length (L1) of the optical fiber (610) is comprised by the p external loops (615).

8. The method according to any one of the preceding claims, wherein the 3D printable material (201) comprises a polymeric material, wherein the polymeric material comprises a light transmissive polymer, and wherein printable material (201) comprises reflective particles (25) configured around the through hole (330) and configured to reflect light back into the optical fiber (610)

9. The method according to any one of the preceding claims, wherein the optical fiber (610) comprises one or more of glass, silica, and polymeric material different from the polymeric material defined in claim 8.

10. A 3D item (1) produced by means of fused deposition modelling, wherein the 3D item (1) comprises a plurality of layers (322) of 3D printed material (202) and a partly integrated leaky optical fiber (610), wherein;
- the plurality of layers (322) comprises n sets (1322) of two stacked layers (322), wherein each set (1322) comprises a first layer (322a) and a second layer (322b), wherein n≥1;
- the optical fiber (610) is partly integrated between the first layer (322a) and the second layer (322b) of one of the n sets (1322), such that the optical fiber (610) extends from the first layer (322a) and at least partly protrudes into the first layer (322a) thereby forming at least part of k2 through holes (330), wherein part of the optical fiber (610) resides in the k2 through holes (330) formed in the set (1322) of layers (322);
- the optical fiber (610) forms p external loops (615) , wherein k2≥2, and wherein 1≤p≤k2-1.

11. The 3D item (1) according to claim 10, wherein each of the p external loops (615) has an external loop length (Lₚ), wherein each of the p external loops (615) has shortest distance (d2) between the through holes (330), wherein the shortest distance (d2) between the through holes (330) for an external loop (615) is defined in a plane through a first stack (340) of layers (322) at least comprising the one or more sets (1322) related to the respective external loop (615), wherein Lₚ>1.1*d2; and wherein at least 90% of a fiber length (L1) of the optical fiber (610) is comprised by the p external loops (615).

12. The 3D item (1) according to any one of claims 10-11, wherein the 3D printed material (202) comprises a polymeric material, wherein the polymeric material comprises a light transmissive polymer, and wherein the 3D printed material (202) comprises reflective particles (25) configured around the through hole (330) and configured to reflect light back into the optical fiber (610)

13. The 3D item (1) according to any one of the preceding claims 10-12, wherein the optical fiber (610) comprises one or more of glass, silica, and polymeric material different from the polymeric material defined in claim 12.

14. A lighting device (1000) comprising the 3D item (1) according to any one of the preceding claims 10-13, and a light source (10) configured to provide visible light source light (11), wherein the optical fiber (610) is configured in a light receiving relationship with the light source (10); wherein the 3D item (1) is configured as one or more of (i) at least part of a lighting device housing, and (ii) at least part of a wall of a lighting chamber.

15. A fused deposition modeling 3D printer (500), comprising: (a) a printer head (501) comprising a printer nozzle (502), (b) a 3D printable material providing device (575) configured to provide 3D printable material (201) to the printer head (501), (c) an optical fiber providing system (602) configured to provide an optical fiber (610), comprising an optical fiber positioning device (603), (d) a substrate (1550) configured to support 3D printed material (202), and (e) a control system (300), wherein; the control system (300) is configured to execute the method according to any one of the preceding claims 1-9.

## Patentansprüche

1. Verfahren zur Herstellung eines 3D-Gegenstands (1) mittels Schmelzschichtung, wobei der 3D-Gegenstand (1) auch mindestens teilweise eine undichte optische Faser (610) umfasst; das Verfahren umfassend:
- eine 3D-Druckstufe, umfassend schichtweises Abscheiden von 3D-druckbarem Material (201), um eine Vielzahl von Schichten (322) aus 3D-gedrucktem Material (202) bereitzustellen, wobei die Vielzahl von Schichten (322) n Sätze (1322) von zwei gestapelten Schichten (322) umfasst, wobei jeder Satz (1322) eine erste Schicht (322a) und eine zweite Schicht (322b) umfasst; wobei n≥1;
- k1 Integrationsstufen, wobei jede Integrationsstufe umfasst: (a) nach dem Bereitstellen der ersten Schicht (322a) eines der n Sätze (1322), Bereitstellen der optischen Faser (610) auf der ersten Schicht (322a), derart, dass sich die optische Faser (610) von der ersten Schicht (322a) erstreckt und mindestens teilweise in die erste Schicht (322a) hineinragt, wodurch mindestens ein Teil eines Durchgangslochs (330) gebildet wird, und (b) anschließendes Bereitstellen der zweiten Schicht (322b) auf der ersten Schicht (322a) und einem Teil der optischen Faser (610), derart, dass ein Teil der optischen Faser (610) in dem Durchgangsloch (330) angeordnet ist, das in dem Satz (1322) von Schichten (322) gebildet ist;
- Ausführen der 3D-Druckstufe und der k Integrationsstufen derart, dass die optische Faser (610) p externe Schleifen (615) bildet, wobei k1≥2, und wobei 1p≤k≤1-1.

2. Verfahren nach Anspruch 1, wobei mindestens eine der k1 Integrationsstufen umfasst: nach dem Bereitstellen der ersten Schicht (322a) eines der n Sätze (1322), Bereitstellen der optischen Faser (610) auf der ersten Schicht (322a), so dass sich die optische Faser (610) von der ersten Schicht (322a) erstreckt und in die erste Schicht (322a) hineinragt, wodurch das Durchgangsloch (330) gebildet wird, und (b) anschließendes Bereitstellen der zweiten Schicht (322b) auf der ersten Schicht (322a) und einem Teil der optischen Faser (610), sodass dieser Teil der optischen Faser (610) in dem Durchgangsloch (330) angeordnet ist, das in dem Satz (1322) von Schichten (322) gebildet ist.

3. Verfahren nach Anspruch 1, wobei mindestens eine der k1 Integrationsstufen umfasst: nachfolgendes Bereitstellen der zweiten Schicht (322b) auf der ersten Schicht (322a) und einem Teil der optischen Faser (610), derart, dass sich die optische Faser (610) auch von der zweiten Schicht (322b) erstreckt und auch mindestens teilweise in die zweite Schicht (322b) hineinragt, wodurch ein weiterer Teil des Durchgangslochs (330) gebildet wird, und ein Teil der optischen Faser (610) in dem Durchgangsloch (330) angeordnet ist, das durch die Schichten (322a,322b) des Satzes (1322) bereitgestellt wird.

4. Verfahren nach einem der vorstehenden Ansprüche, wobei während mindestens einer der k Integrationsstufen die Druckbedingungen derart ausgewählt sind, dass beim Bereitstellen der optischen Faser (610) auf der ersten Schicht (322a) eine Temperatur des 3D-gedruckten Materials (202) der ersten Schicht (322) an einer Position (331), an der die optische Faser (610) mit dem 3D-gedruckten Material (202) in Kontakt gebracht wird, über der Schmelztemperatur Tₘ des 3D-gedruckten Materials (202) liegt.

5. Verfahren nach einem der vorstehenden Ansprüche, ferner umfassend: Verwenden eines Schmelzschichtungs-3D-Druckers (500), umfassend (a) ein optisches Faserbereitstellungssystem (602), das konfiguriert ist, um die optische Faser (610) bereitzustellen; wobei das optische Faserbereitstellungssystem (602) eine optische Faserpositionierungsvorrichtung (603) umfasst, und (b) ein Substrat (1550), das konfiguriert ist, um 3D-gedrucktes Material (202) zu stützen; wobei das Verfahren umfasst: Bereitstellen der p externen Schleifen (615) durch Bewegen von einem oder mehreren von (i) der optischen Faserpositionierungsvorrichtung (603) und (ii) dem Substrat (1550).

6. Verfahren nach Anspruch 5, wobei der Schmelzschichtungs-3D-Drucker (500) ferner eine Druckerdüse (502) umfasst; wobei das Verfahren umfasst:
Einpressen der optischen Faser (610) mindestens teilweise in die erste Schicht (322a) durch Steuern einer vertikalen Position von einem oder mehreren von (i) der Druckerdüse (502), (ii) der optischen Faserpositionierungsvorrichtung (603) und (iii) dem Substrat (1550).

7. Verfahren nach einem der vorstehenden Ansprüche, wobei jede der p externen Schleifen (615) eine externe Schleifenlänge (Lₚ) aufweist, wobei jede der p externen Schleifen (615) einen kürzesten Abstand (d2) zwischen den Durchgangslöchern (330) aufweist, wobei der kürzeste Abstand (d2) zwischen den Durchgangslöchern (330) für eine externe Schleife (615) in einer Ebene durch einen ersten Stapel (340) von Schichten (322) definiert ist, der mindestens den einen oder die mehreren Sätze (1322) umfasst, die sich auf die jeweilige externe Schleife (615) beziehen, wobei Lₚ>1,1*d2; und wobei mindestens 90 % einer Faserlänge (L1) der optischen Faser (610) durch die p externen Schleifen (615) umfasst sind.

8. Verfahren nach einem der vorstehenden Ansprüche, wobei das 3D-druckbare Material (201) ein polymeres Material umfasst, wobei das polymere Material ein lichtdurchlässiges Polymer umfasst, und wobei druckbares Material (201) reflektierende Partikel (25) umfasst, die um das Durchgangsloch (330) herum konfiguriert sind und konfiguriert sind, um Licht zurück in die optische Faser (610) zu reflektieren.

9. Verfahren nach einem der vorstehenden Ansprüche, wobei die optische Faser (610) eines oder mehrere von Glas, Siliciumdioxid und polymerem Material umfasst, das sich von dem in Anspruch 8 definierten polymeren Material unterscheidet.

10. 3D-Gegenstand (1), der mittels Schmelzschichtung hergestellt wird, wobei der 3D-Gegenstand (1) eine Vielzahl von Schichten (322) aus 3D-gedrucktem Material (202) und eine teilweise integrierte undichte optische Faser (610) umfasst, wobei;
- die Vielzahl von Schichten (322) n Sätze (1322) von zwei gestapelten Schichten (322) umfasst, wobei jeder Satz (1322) eine erste Schicht (322a) und eine zweite Schicht (322b) umfasst, wobei n≥1;
- die optische Faser (610) teilweise zwischen der ersten Schicht (322a) und der zweiten Schicht (322b) eines der n Sätze (1322) integriert ist, derart, dass sich die optische Faser (610) von der ersten Schicht (322a) erstreckt und mindestens teilweise in die erste Schicht (322a) hineinragt, wodurch mindestens ein Teil von k2 Durchgangslöchern (330) gebildet wird, wobei ein Teil der optischen Faser (610) in den k2 Durchgangslöchern (330) liegt, die in dem Satz (1322) von Schichten (322) gebildet sind;
- die optische Faser (610) p externe Schleifen (615) bildet, wobei k2≥2, und wobei 1≤p≤k2-1.

11. 3D-Gegenstand (1) nach Anspruch 10, wobei jede der p externen Schleifen (615) eine externe Schleifenlänge (Lₚ) aufweist, wobei jede der p externen Schleifen (615) einen kürzesten Abstand (d2) zwischen den Durchgangslöchern (330) aufweist, wobei der kürzeste Abstand (d2) zwischen den Durchgangslöchern (330) für eine externe Schleife (615) in einer Ebene durch einen ersten Stapel (340) von Schichten (322) definiert ist, der mindestens den einen oder die mehreren Sätze (1322) umfasst, die sich auf die jeweilige externe Schleife (615) beziehen, wobei Lₚ>1,1*d2; und wobei mindestens 90 % einer Faserlänge (L1) der optischen Faser (610) durch die p externen Schleifen (615) umfasst sind.

12. 3D-Gegenstand (1) nach einem der Ansprüche 10 bis 11, wobei das 3D-gedruckte Material (202) ein polymeres Material umfasst, wobei das polymere Material ein lichtdurchlässiges Polymer umfasst, und wobei das 3D-gedruckte Material (202) reflektierende Partikel (25) umfasst, die um das Durchgangsloch (330) herum konfiguriert sind und konfiguriert sind, um Licht zurück in die optische Faser (610) zu reflektieren.

13. 3D-Gegenstand (1) nach einem der vorstehenden Ansprüche 10 bis 12, wobei die optische Faser (610) eines oder mehrere von Glas, Siliciumdioxid und polymerem Material umfasst, das sich von dem in Anspruch 12 definierten polymeren Material unterscheidet.

14. Beleuchtungsvorrichtung (1000), umfassend den 3D-Gegenstand (1) nach einem der vorstehenden Ansprüche 10 bis 13 und eine Lichtquelle (10), die konfiguriert ist, um sichtbares Lichtquellenlicht (11) bereitzustellen, wobei die optische Faser (610) in einer lichtempfangenden Beziehung mit der Lichtquelle (10) konfiguriert ist; wobei der 3D-Gegenstand (1) als eines oder mehrere von (i) mindestens einem Teil eines Beleuchtungsvorrichtungsgehäuses und (ii) mindestens einem Teil einer Wand einer Beleuchtungskammer konfiguriert ist.

15. Schmelzschichtungs-3D-Drucker (500), umfassend: (a) einen Druckerkopf (501), der eine Druckerdüse (502) umfasst, (b) eine Vorrichtung zur Bereitstellung von 3D-druckbarem Material (575), die konfiguriert ist, um 3D-druckbares Material (201) an den Druckerkopf (501) bereitzustellen, (c) ein optisches Faserbereitstellungssystem (602), das konfiguriert ist, um eine optische Faser (610) bereitzustellen, umfassend eine optische Faserpositionierungsvorrichtung (603), (d) ein Substrat (1550), das konfiguriert ist, um 3D-gedrucktes Material (202) zu stützen, und (e) ein Steuersystem (300), wobei; das Steuersystem (300) konfiguriert ist, um das Verfahren nach einem der vorstehenden Ansprüche 1 bis 9 auszuführen.

## Revendications

1. Procédé de production d'un article 3D (1) au moyen d'une modélisation par dépôt en fusion, dans lequel l'article 3D (1) comprend également au moins partiellement une fibre optique (610) qui fuit ; le procédé comprenant :
- une étape d'impression en 3D, comprenant le dépôt par couches de matériau imprimable en 3D (201), pour fournir une pluralité de couches (322) de matériau imprimé en 3D (202), dans lequel la pluralité de couches (322) comprend n ensembles (1322) de deux couches empilées (322), dans lequel chaque ensemble (1322) comprend une première couche (322a) et une seconde couche (322b) ; dans lequel n≥1 ;
- k1 étapes d'intégration, dans lequel chaque étape d'intégration comprend : (a) après avoir fourni la première couche (322a) de l'un des n ensembles (1322), la fourniture de la fibre optique (610) sur la première couche (322a), de telle sorte que la fibre optique (610) s'étend de la première couche (322a) et fait au moins partiellement saillie dans la première couche (322a) formant de ce fait au moins une partie d'un trou traversant (330), et (b) la fourniture ensuite de la seconde couche (322b) sur la première couche (322a) et une partie de la fibre optique (610), de telle sorte qu'une partie de la fibre optique (610) réside dans le trou traversant (330) formé dans l'ensemble (1322) de couches (322) ;
- l'exécution de l'étape d'impression 3D et des k étapes d'intégration de telle sorte que la fibre optique (610) forme p boucles externes (615), dans lequel k1≥2, et dans lequel 1p≤k≤1-1.

2. Procédé selon la revendication 1, dans lequel au moins l'une des k1 étapes d'intégration comprend : après la fourniture de la première couche (322a) de l'un des n ensembles (1322), la fourniture de la fibre optique (610) sur la première couche (322a), de telle sorte que la fibre optique (610) s'étend de la première couche (322a) et fait saillie dans la première couche (322a), formant de ce fait le trou traversant (330), et (b) la fourniture ensuite de la seconde couche (322b) sur la première couche (322a) et une partie de la fibre optique (610), de telle sorte qu'une partie de la fibre optique (610) réside dans le trou traversant (330) formé dans l'ensemble (1322) de couches (322).

3. Procédé selon la revendication 1, dans lequel au moins l'une des k1 étapes d'intégration comprend : la fourniture ensuite de la seconde couche (322b) sur la première couche (322a) et une partie de la fibre optique (610), de telle sorte que la fibre optique (610) s'étend également de la seconde couche (322b), et fait également saillie au moins partiellement dans la seconde couche (322b), formant de ce fait une autre partie du trou traversant (330), et une partie de la fibre optique (610) réside dans le trou traversant (330) fourni par les couches (322a, 322b) de l'ensemble (1322).

4. Procédé selon l'une quelconque des revendications précédentes, dans lequel pendant au moins l'une des k phases d'intégration les conditions d'impression sont choisies de telle sorte que lors de la fourniture de la fibre optique (610) sur la première couche (322a), une température du matériau imprimé en 3D (202) de la première couche (322) au niveau d'une position (331) où la fibre optique (610) est en contact avec le matériau imprimé en 3D (202) est au-dessus de la température de fusion Tₘ du matériau imprimé en 3D (202).

5. Procédé selon l'une quelconque des revendications précédentes, comprenant en outre : l'utilisation d'une imprimante 3D (500) à modélisation par dépôt en fusion comprenant (a) un système de fourniture de fibre optique (602) conçu pour fournir la fibre optique (610) ; dans lequel le système de fourniture de fibre optique (602) comprend un dispositif de positionnement de fibre optique (603), et (b) un substrat (1550) conçu pour supporter un matériau imprimé en 3D (202) ; dans lequel le procédé comprend : la fourniture des p boucles externes (615) en entraînant en mouvement un ou plusieurs parmi (i) le dispositif de positionnement de fibre optique (603), et (ii) le substrat (1550).

6. Procédé selon la revendication 5, dans lequel l'imprimante 3D (500) à modélisation par dépôt en fusion comprend en outre une buse d'imprimante (502) ; dans lequel le procédé comprend : le pressage de la fibre optique (610) au moins partiellement dans la première couche (322a) en commandant une position verticale d'un ou plusieurs parmi (i) la buse d'imprimante (502), (ii) le dispositif de positionnement de fibre optique (603), et (iii) le substrat (1550).

7. Procédé selon l'une quelconque des revendications précédentes, dans lequel chacune des p boucles externes (615) a une longueur de boucle externe (Lₚ), dans lequel chacune des p boucles externes (615) a une distance la plus courte (d2) entre les trous traversants (330), dans lequel la distance la plus courte (d2) entre les trous traversants (330) pour une boucle externe (615) est définie dans un plan à travers une première pile (340) de couches (322) comprenant au moins les un ou plusieurs ensembles (1322) se rapportant à la boucle externe (615) respective, dans lequel Lₚ>1,1*d2 ; et dans lequel au moins 90 % d'une longueur de fibre (L1) de la fibre optique (610) est comprise par les p boucles externes (615).

8. Procédé selon l'une quelconque des revendications précédentes, dans lequel le matériau imprimable en 3D (201) comprend un matériau polymère, dans lequel le matériau polymère comprend un polymère transmettant la lumière, et dans lequel le matériau imprimable (201) comprend des particules réfléchissantes (25) conçues autour du trou traversant (330) et conçues pour réfléchir la lumière en retour dans la fibre optique (610).

9. Procédé selon l'une quelconque des revendications précédentes, dans lequel la fibre optique (610) comprend un ou plusieurs parmi du verre, de la silice, et un matériau polymère différent du matériau polymère défini dans la revendication 8.

10. Article 3D (1) produit au moyen d'une modélisation par dépôt en fusion, dans lequel l'article 3D (1) comprend une pluralité de couches (322) de matériau imprimé en 3D (202) et une fibre optique (610) qui fuit partiellement intégrée, dans lequel ;
- la pluralité de couches (322) comprend n ensembles (1322) de deux couches empilées (322), dans lequel chaque ensemble (1322) comprend une première couche (322a) et une seconde couche (322b), dans lequel n≥1 ;
- la fibre optique (610) est partiellement intégrée entre la première couche (322a) et la seconde couche (322b) de l'un des n ensembles (1322), de telle sorte que la fibre optique (610) s'étend de la première couche (322a) et fait au moins partiellement saillie dans la première couche (322a) formant de ce fait au moins une partie de k2 trous traversants (330), dans lequel une partie de la fibre optique (610) réside dans les k2 trous traversants (330) formés dans l'ensemble (1322) de couches (322) ;
- la fibre optique (610) forme p boucles externes (615), dans lequel k2≥2, et dans lequel 1≤p≤k2-1.

11. Article 3D (1) selon la revendication 10, dans lequel chacune des p boucles externes (615) a une longueur de boucle externe (Lₚ), dans lequel chacune des p boucles externes (615) a une distance la plus courte (d2) entre les trous traversants (330), dans lequel la distance la plus courte (d2) entre les trous traversants (330) pour une boucle externe (615) est définie dans un plan à travers une première pile (340) de couches (322) comprenant au moins les un ou plusieurs ensembles (1322) se rapportant à la boucle externe (615) respective, dans lequel Lₚ>1,1*d2 ; et dans lequel au moins 90 % d'une longueur de fibre (L1) de la fibre optique (610) est comprise par les p boucles externes (615).

12. Article 3D (1) selon l'une quelconque des revendications 10 à 11, dans lequel le matériau imprimé en 3D (202) comprend un matériau polymère, dans lequel le matériau polymère comprend un polymère transmettant la lumière, et dans lequel le matériau imprimé en 3D (202) comprend des particules réfléchissantes (25) conçues autour du trou traversant (330) et conçues pour réfléchir la lumière en retour dans la fibre optique (610).

13. Article 3D (1) selon l'une quelconque des revendications précédentes 10 à 12, dans lequel la fibre optique (610) comprend un ou plusieurs parmi du verre, de la silice, et un matériau polymère différent du matériau polymère défini dans la revendication 12.

14. Dispositif d'éclairage (1000) comprenant l'article 3D (1) selon l'une quelconque des revendications précédentes 10 à 13, et une source de lumière (10) conçue pour fournir une lumière de source de lumière visible (11), dans lequel la fibre optique (610) est conçue dans une relation de réception de lumière avec la source de lumière (10) ; dans lequel l'article 3D (1) est conçu en tant qu'un ou plusieurs parmi (i) au moins une partie d'un logement de dispositif d'éclairage, et (ii) au moins une partie d'une paroi d'une chambre d'éclairage.

15. Imprimante 3D (500) à modélisation par dépôt en fusion, comprenant : (a) une tête d'imprimante (501) comprenant une buse d'imprimante (502), (b) un dispositif de fourniture de matériau imprimable en 3D (575) conçu pour fournir un matériau imprimable en 3D (201) à la tête d'imprimante (501), (c) un système de fourniture de fibre optique (602) conçu pour fournir une fibre optique (610), comprenant un dispositif de positionnement de fibre optique (603), (d) un substrat (1550) conçu pour supporter un matériau imprimé en 3D (202), et (e) un système de commande (300), dans lequel ; le système de commande (300) est conçu pour exécuter le procédé selon l'une quelconque des revendications précédentes 1 à 9.
